# EUROPÄISCHE PATENTSCHRIFT

(11) **EP 1 372 409 B1**
(45) Veröffentlichungstag und Bekanntmachung des Hinweises auf die Patenterteilung: **02.02.2005**
(21) Anmeldenummer: 02732540.6
(22) Anmeldetag: 30.03.2002
(51) Int. Cl.: A23K 1/14, A23J 3/14, B07B 15/00

(54) **VERFAHREN UND ANLAGE ZUR AUFBEREITUNG VON EXTRAKTIONSSCHROT AUS SONNENBLUMENSAAT FÜR DIE TIERERNÄHRUNG**
METHOD AND SYSTEM FOR PREPARING EXTRACTION MEAL FROM SUN FLOWER SEEDS FOR ANIMAL FEED
PROCEDE ET INSTALLATION POUR LE TRAITEMENT DE GRUAU D'EXTRACTION, OBTENU A PARTIR DE GRAINES DE TOURNESOL ET DESTINE A L'ALIMENTATION ANIMALE

(30) Priorität: 06.04.2001 DE 10117421
(43) Veröffentlichungstag der Anmeldung: 02.01.2004
(73) Patentinhaber: WALTER, Ulrich, 40822 Mettmann (DE)
(72) Erfinder: WALTER, Ulrich, 40822 Mettmann (DE)
(74) Vertreter: Müller-Gerbes, Margot, Dipl.-Ing.
(86) Internationale Anmeldenummer: PCT/EP2002/003565
(87) Internationale Veröffentlichungsnummer: WO 2002/080699

(56) Entgegenhaltungen:
- EP-A- 0 073 581
- EP-A- 0 750 845
- EP-A- 0 919 294
- DE-A- 3 707 541
- DE-A- 4 034 739
- US-A- 3 271 160
- US-A- 3 895 003
- LEVIC J ET AL: "Removal of cellulose from sunflower meal by fractionation." JOURNAL OF THE AMERICAN OIL CHEMISTS' SOCIETY 1992 FEED TECH. DEP., FAC. OF TECH., 21000 NOVI SAD, YUGOSLAVIA, Bd. 69, Nr. 9, Seiten 890-893, XP001094058 in der Anmeldung erwähnt

## Beschreibung

Die Erfindung bezieht sich auf ein Verfahren zur abfallosen Aufbereitung von Extraktionsschrot aus Sonnenblumensaat von konventionellen Sonnenblumen für die Tierernährung, wobei der Extraktionsschrot Teilchen aus Schalen, Kernteilen und Schalen mit anhaftenden Kernteilen umfaßt, die durch mindestens einmaliges Sieben nach Korngrößen getrennt in zwei Fraktionen mit unterschiedlichen Gehalten an Rohproteinen aufgetrennt werden, wobei eine proteinhaltige Fraktion mit hohem Rohproteingehalt geeignet für Monogastrier als Tiernahrung und eine rohfaserhaltige Fraktion mit niedrigerem Rohproteingehalt geeignet für Wiederkäuer als Tiernahrung erhalten wird, sowie eine Anlage zum Durchführen des Verfahrens.

Ein Verfahren der gattungsgemäßen Art ist aus der Literaturstelle Levic, Jovanka et al. "Removal of cellulose from sunflower meal by fraptionation", (Journal of the American Oil Chemist's Society Jaocs, 1992, 69(9) 890-893) bekannt, bei dem der nach dem Schälen der Sonnenblumensaat erhaltene Extraktionsschrot, nämlich Schalen mit anhaftendem Kernfleisch, bei dem 20 % der Teilchen größer als 5,0 mm, 37 % der Teilchen zwischen 2 und 5 mm und 41 % der Teilchen kleiner 2 mm sind, durch einmaliges oder zweimaliges Sieben in zwei Fraktionen unterschiedlicher Korngrößen aufgeteilt werden. Durch das Sieben erfolgt weder ein Ablösen des an den Schalen anhaftenden Kernfleisches noch eine Strukturierung, wie Auffasern der Schalen. Das als Rinderfutter bezeichnete rohfaserhaltige Produkt enthält noch mindestens 30 % Rohprotein und umfaßt alle größeren Teilchen, insbesondere die großen Schalenteilchen, welche für Rinder - Wiederkäuer - in der vorliegenden Form kaum verdaulich sind. Die beim Sieben erhaltene an Rohprotein reiche Fraktion mit einem Gehalt von über 42% an Rohprotein umfaßt die durch Sieben erhaltenen kleineren Teilchen des Extraktionsschrotes, wobei jedoch noch erhebliche Mengen von rohfaserhaltigen Teilchen, nämlich kleine Schalenteilchen mit und ohne anhaftendes Kernfleisch vorhanden sind. Aufgrund des verbleibenden hohen noch über 10 % liegenden Gehaltes an Rohfasern ist auch die an Rohprotein reiche Siebfraktion als Futtermittel für Monogastrier nicht optimal aufbereitet, und bleibt somit unverdaulich.

Aus der DE 40 34 738 A1 und DE 40 34 739 D2 sind Verfahren zur Aufbereitung von Sonnenblumensamen durch Schälen vor der Ölgewinnung bekannt. Hierbei wird versucht, durch wiederholtes Schälen und Sichten das Kernfleisch von der Schale zu trennen und den Feinanteil der für die Tierernährung nutzbaren Fraktion zuzuführen. Es handelt sich um einen unwirtschaftlichen Schälprozeß, wobei mit 20 % Schalenabfällen gearbeitet wird, die zur Entsorgung verbrannt werden. Es entsteht kein ernährungsphysiologisch brauchbares oder verwertbares Produkt. Auch die vollständige Ablösung des Kernfleisches von der Schale gelingt nicht, so daß mit dem Abfall auch noch wertvolle Proteine mit verbrannt werden.

Bei dem Verfahren gem. DE 37 07 541 A1 wird die Aufbereitung fettreicher Ölsaaten, wie Sonnenblumensaat beschrieben. Das Verfahren zeichnet sich dadurch aus, daß das Trocknen der getemperten Samen unter Einstellung eines Wassergehaltes unter 10 % durch Schockerhitzung bei Temperaturen von 100 bis 150° über Zeiträume bis zu 5 Minuten erfolgt. Hierbei kann bereits eine teilweise Koagulierung des Eiweißes auftreten und die Verdaulichkeit des Produktes in Mitleidenschaft gezogen werden. Auch hier handelt es sich um ein Aufbereitungsverfahren, das vor dem Ölmühlenprozeß stattfindet, das heißt, es handelt sich um einen Schälprozeß von Sonnenblumensamen und nicht um die weitere Aufbereitung von Sonnenblumen-Extraktionsschrot, der nach der Ölgewinnung zurückbleibt. Durch die starke Proteindenaturierung infolge der hohen Temperaturen ist das Produkt für die tiergerechte Fütterung nur bedingt einsetzbar.

In der EP 0750845 A2 wird ein Verfahren zum Aufschluß von rohfaserreichem Material durch Laugen beschrieben, wobei die Laugenbehandlung mit einer Fermentation kombiniert wird.

Aus der US-A-3271160 ist ein Verfahren zum Auftrennen von entölten Distelsamen in eine proteinreiche Fraktion mit kleinen Teilchen und eine proteinarme Fraktion mit größeren Teilchen bekannt. Hierbei werden die entölten Distelsamen zuerst zerschlagen und danach durch Sieben in zwei Fraktionen unterschiedlicher Teilchengröße getrennt.

Sonnenblumensaat-Extraktionsschrot wird bei der Gewinnung von Sonnenblumenöl erhalten. Sonnenblumensaat, die zuerst zerkleinert wird, wird in einem ersten Pressverfahren auf etwa 15-20 % Öl entölt. Danach wird weiteres Öl in einer Extraktionsanlage durch Erwärmen mit Heißdampf und Zusatz von Lösungsmittel Hexan im Gegenstromverfahren bis auf einen Restgehalt von etwa 1-3 % entzogen, der nun verbleibende Rest wird als Extraktionsschrot bezeichnet.

In der Tierernährung werden hohe Mengen von Proteinen benötigt, wobei ausschließlich Proteine bzw. Proteinträger pflanzlichen Ursprungs eingesetzt werden sollen. Zu den möglichen pflanzlichen Proteinträgern zählen Soja, Raps, Sonnenblumen, Palmkern, andere Ölfrüchte, Lupinen, Hülsenfrüchte wie Futtererbsen, Ackerbohnen und Rückstände aus der Stärkegewinnung, wie Maisgluten. Von den vorgenannten Proteinträgern beherrschen die Sojaprodukte zu etwa 50 % den Markt. Ein großer Anteil der Sojaprodukte geht allerdings auf gentechnisch veränderte Provinienzen (GVO) zurück, die nicht überall zugelassen sind. Insbesondere werden bereits viele Mischprodukte enthaltend gentechnisch veränderte Soja (GVO) angeboten. Viele Verbraucher lehnen indessen Lebensmittel ab, die mit genmanipulierten Rohstoffen erzeugt werden, das bedeutet, daß auch bei der Erzeugung von Lebensmitteln tierischen Ursprungs GVO-freie Rohstoffe zur Tierernährung eingesetzt werden müssen.

In Europa werden GVO-freie Ölsaaten angebaut, von denen die Sonnenblumen besonders hochwertig sind, da ihre Proteine ein biologisch hochwertiges Aminosäuremuster aufweisen, so daß sie hinsichtlich der Proteinqualität gut geeignet für die Tierernährung sind.

Auch der bei der Ölgewinnung aus Sonnenblumen als Beiprodukt (Abfallprodukt) anfallende Sonnenblumen-Extraktionsschrot enthält Proteine, die biologisch hochwertig sind, so daß der Sonnenblumen-Extraktionsschrot hinsichtlich seiner Proteinqualität den Proteinen des Soja-Extraktionsschrotes annähernd gleichwertig ist.

Aus der Sicht der Tierernährung sind die Proteinträgerstoffe unter ernährungsphysiologischen Richtlinien auszuwählen, nämlich
- Rohfasergehalt und Verdaulichkeit/Nährstoffkonzentration
- Proteine nach Menge, Verdaulichkeit und biologischer Wertigkeit
- Fette, Fettsäuren und Wirkstoffe
- Inhaltsstoffe mit anti-nutritiver Wirkung.

Unter Berücksichtigung der vorgenannten Kriterien sind Extraktionsschrote aus Soja für die Ernährung von Monogastriern gut geeignet. Extraktionsschrote aus Sonnenblumensaat konventioneller Qualität sind im Hinblick auf die Merkmale Rohfasergehalt und Verdaulichkeit für Monogastrier weniger geeignet.

Die Rückstände - Extraktionsschrot - aus der Olgewinnung von Sonnenblumensaat sind jedoch für die Tierernährung gut geeignet auch wegen ihres Fettsäuremusters. Insbesondere enthalten Sonnenblumensaaten die essentielle Fettsäure der Linolsäure in großer Menge, welche sie in Bezug auf diese Eigenschaft auch Soja und Raps überlegen macht, wie aus der nachfolgenden Tabelle 1 ersichtlich:

**Tabelle 1**

| **Fettsäuren in % im Öl aus Sonnenblumen-Kernen, ein Vergleich mit Soja- und Raps-Öl** | | | | |
|---|---|---|---|---|
| | Palmitinsäure C 16:0 | Stearinsäure C 18:0 | Ölsäure C18:1w9 | Linolsäure C18:2w6 |
| **Sonnenblume** konventionelle Sorten | 4-10 | 2-6 | 10-12 | 33-77 |
| **Soja** | 2-14 | 2-7 | 20-36 | 48-60 |
| **Raps** | 1-6 | 1-3 | 11-52 | 10-36 |
| Quelle: H. Jerosch et al. 1993, Henkel KGaA 1997 | | | | |

Weitere positive Aspekte Extraktionsschrote aus Sonnenblumen sind:
- der hohe ernährungsphysiologische Wert des Öls in Sonnenblumenkernen. Der Gehalt an essentieller Linolsäure (C18:2ω6) liegt deutlich über den entsprechenden Gehalten in Soja und Raps, siehe Tabelle 1.
- Sonnenblumen-Kerne sind praktisch frei von anti-nutritiven Substanzen. Im Gegensatz dazu enthalten Soja und Raps eine Reihe von Wirkstoffen, wie Trypsin-Hemmstoffe (Soja) und Senfölgeycoside / Glucosinolate (Raps, die z.T. sogar toxisch sind. Auf jeden Fall jedoch beeinträchtigen diese Wirkstoffe den Nährwert des Rohstoffs, sofern sie nicht durch eine Hitzebehandlung (Toasten) inaktiviert werden. Falls nicht schonend getoastet wird, werden die Proteine dieser Rohstoffe geschädigt und ihr Nährwert gemindert - in der Praxis ein erhebliches Problem.
- Eine Hitzebehandlung ist bei den Nachprodukten der Sonnenblume nicht erforderlich, was der Eiweiß-Qualität zugute kommt.
- Im Ackerbau - in der Fruchtfolge - ist die Sonnenblume eine wertvolle Vorfrucht, die die Gare des Bodesn und damit die Bodenfruchbarkeit fördert.

Trotz all dieser Vorteile bedingt eine botanische Eigenart der Sonnenblumen-Kerne, daß das Beiprodukt aus der Verarbeitung der Kerne - das Sonnenblumen-Extraktionsschrot - in der konventionellen Qualität zwar für Wiederkäuer, weniger jedoch für die Ernährung von Geflügel und Schweinen brauchbar ist.

Die Sonnenblume bildet ihre Samen in Form von Nüssen - Achänen - aus. Die Achänen sind einsamige Früchte, in denen der öl- und eiweißhaltige Kern mit der Fruchthülle so dicht verwächst, daß sich beim Schälen Kern und Schale nicht mehr glatt und vollständig trennen lassen. Die Folge ist, daß das aus den Kernen gewonnene Extraktionsschrot neben dem entfetteten Kernmaterial einen hohen Anteil an Bruchstücken von Schalen enthält, denen Reste von Kernfleisch anhaften. Dieser Schalenanteil bringt es mit sich, daß konventionell erzeugte Extraktionsschrote aus Sonnenblumenkernen - trotz der hochwertigen Proteine - nicht den ernährungsphysiologischen Anforderungen genügen, die für Geflügel und Schweine gelten. Entscheidend ist der Faktor "Verdaulichkeit der organischen Substanz". Die Verdaulichkeit in den herkömmlichen Qualitäten ist für die Anforderungen von Geflügel und Schweinen nicht ausreichend.

In der Tabelle 2 sind Angaben zu den verschiedenen Extraktionsschroten enthalten, wobei die Rohnährstoffe den Nährwert gemäß Weender Analyse Rohstoffe/Ration aufgliedern und VQ der Verdauungsquotient ist, dergestalt, daß die Differenz zwischen organischer Substanz mit Futter und organischer Substanz im Kot die verdauliche organische Substanz ergibt, die Verhältniszahl in % ist der VQ. Die Angaben der Tabelle 2 sind entnommen aus Lennerts, L. 1984, Menke K.M., Huss W. 1987, Hugger H. 1989, DLG 1991/1997.

Die Zahlen in Tabelle 2 belegen, daß die in Verdaulichkeitsversuchen gemessenen Werte von Sonnenblumen-Extraktionsschroten herkömmlicher Qualität den Anforderungen für Wiederkäuer genügen, für Schweine jedoch nicht ausreichend sind. Das Gleiche gilt für Geflügel, jedoch fehlen hier die aktuellen Daten, weil Verdaulichkeitsversuche beim Geflügel aus methodischen Gründen nicht üblich sind. In der Folge gehen Sonnenblumen-Extraktionsschrote bisher nur mit einer Einmischrate von max. 20% der erforderlichen Eiweißträger in Rezepturen für Mischfutter ein, die für Schweine bestimmt sind.

Aber selbst für Wiederkäuer haben Sonnenblumen-Schalen eine Verdaulichkeit, die so gering ist (Tabelle 2), daß der Organismus diesen Abfallstoff energetisch nicht nutzen kann. Ursache ist der hohe Gehalt an Gerüstsubstanzen, die der Verdauungsapparat nicht aufschließt. Die Verdaulichkeit der Sonnenblumen-Schalen, aber auch die der Stengel und Köpfe (Fruchtstände), läßt sich jedoch durch Aufschluß mit Lauge erhöhen. Auf diese Weise kann der Organismus den Rohstoff energetisch nutzen, alternative Energie-Träger können eingespart werden. Bei Behandlung mit Natronlauge wird der Komplex

Cellulose - Lignin - Hemicellulose

gelockert/gespalten. In der Folge kann mehr Cellulose von den Mikroorganismen in den Vormägen abgebaut werden, auf diese Weise wird das gerüststubstanzreiche Material energetisch aufgewertet. Die Futteraufnahme steigt und die Passagerate des aufgeschlossenen Materials im Verdauungstrakt erhöht sich. Der Effekt der Aufschließung ist um so ausgeprägter, je stärker die Gerüstsubstanz lignifiziert ist.

**Tabelle 2**

| **Extraktionsschrote - Rohfaser, Rohnährstoffe und Verdaulichkeitswerte, alle Angaben in % (gerundet), Trockensubstanz ≈ 88 - 90 %** | | | | | | | |
|---|---|---|---|---|---|---|---|
| **Ölsaat** | **Gehalte** | | | **Organische Substanz Vedaulichkeit = VQ**^{**10**} | | | |
| | **Rohfaser** | **Rohfett** | **Rohprotein** | **Wiederkäuer** | | **Schwein** | |
| | | | | gemessene Werte | Anforderungen nach Leistung | gemessene Werte | Anforderungen nach Leistung |
| **Sojabohne** | 6-7 | 20-22 | 35-39 | **92** | 80-50 | **87** | 90-70 |
| Extraktionsschrot *unentschälte Saat* | 6-7 | 1-2 | 42-45 | **91** | 80-50 | **87** | 90-70 |
| Extraktionsschrot *entschälte-Saat* | 3-4 | 1-2 | 49-50 | **92** | 80-50 | **92** | 90-70 |
| Schalen | 34 | 2 | 2-12 | **72** | 80-50 | **55** | 90-70 |
| **Raps-Saat** | 6-14 | 43 | 24 | **77** | 80-50 | **71** | 90-70 |
| Extraktionsschrot | 12-15 | 2 | 35 | **80** | 80-50 | **67** | 90-70 |
| **Sonnenblumenkerne** | 19-34 | 42-52 | 22-24 | **51** | 80-50 | **62** | 90-70 |
| **Extraktionsschrot *unentschälte Saat*** | **30-34** | **2** | **26-29** | **51** | 80-50 | **(19)** | 90-70 |
| **Extraktionsschrot *teil-entschälte Saat*** | **20-22** | **2-2,4** | **34-39** | **75** | **80-50** | **46** | **90-70** |
| **Extraktionsschrot *entschälte Saat*** | 13-15 | 1,5 | 40-45 | | | | |
| Schalen | 60 | 1 | 4 | **19** | 80-50 | | |

Ausschlaggebend für den Wert der Proteine ist ihr Gehalt an essentiellen Aminosäuren, nämlich Lysin, Methionin und Cystin, Threonin, und Tryptophan. In der Tabelle 3 sind die limitierenden essentiellen Aminosäuren in den Extraktionsschroten in Gramm je 100g Rohprotein angegeben.

Die Tabelle 3 zeigt, daß
Sonnenblumensaat hinsichtlich des Methionin und Cystin der Sojabohne überlegen ist,
in Bezug auf Lysin rangiert Sonnenblumensaat hinter Soja und Raps.

In Bezug auf Thrionin und Tryptophan sind Soja, Raps und Sonnenblumensaat praktisch gleichwertig.

Somit kommen die Proteine aus Sonnenblumensaat denen aus Soja sehr nahe.

**Tabelle 3**

| **Limitierende essentielle Aminosäuren in Ölsaatschroten Angaben in g/100g Rohprotein (RP)** | | | | | |
|---|---|---|---|---|---|
| **Aminosäure** | **Soja** | | **Raps** | **Sonnenblume** | |
| | **unentschält 44 % RP**^{**47**} | **entschält 50 % RP** | **unentschält 35 % RP** | **unentschält 26 % RP** | **teil-entschält 35 % RP** |
| Lysin | 6,5 | 5,8 | 5,7 | 3,7 | 3,6 |
| Methionin | 1,5 | 1,2 | 2,2 | 1,9 | 2,3 |
| Cystin | | | 2,4 | 1,6 | 1,8 |
| Threonin | 4,0 | 3,7 | 4,5 | 3,9 | 3,7 |
| Tryptophan | 1,3 | 1,3 | 1,3 | 1,4 | 1,2 |
| Quelle: Lennerts, L. 1984, Jerosch H. et al. 1999 | | | | | |

Da Monogastrier wie Schweine und Geflügel nur geringe Mengen an Rohfaseranteilen verarbeiten können, ist der Einsatz von Sonnenblumen-Extraktionsschrot konventioneller Herkunft für die Tierfütterung von Monogastriern wegen des hohen Rohfasergehaltes von 20 % und mehr nicht üblich. Erst wenn der Rohfaseranteil unter die für Monogastrier kritische Grenze von 10 % gesenkt werden kann bei gleichzeitiger Erhöhung der Gehalte für Rohprotein genügen Extraktionsschrote in Verdaulichkeit und Nährstoffkonzentration den Anforderungen dieser Tierarten.

Der Erfindung liegt die Aufgabe zugrunde, Sonnenblumensaat-Extraktionsschrot aus konventionellen Sonnenblumen für die Tierernährung abfallfrei aufzubereiten und zwar sowohl für Monogastrier als auch für Wiederkäuer so aufzubereiten, daß ein hochwertiger pflanzlicher Proteinträger geschaffen wird, der den Sojaprodukten-Extraktionsschrot annähernd gleichwertig ist. Hierbei ist es ein Ziel der Erfindung, den anfallenden Extraktionsschrot aus Sonnenblumensaat aus dem Prozeß der Ölgewinnung vollständig aufzubereiten, d.h. ohne Abfall.

Erfindungsgemäß wird diese Aufgabe mit einem Verfahren gemäß den kennzeichnenden Merkmalen des Anspruches 1 gelöst. Es wird also erfindungsgemäß aus dem konventionellen Sonnenblumensaat-Extraktionsschrot eine Fraktion hergestellt, bei der der Gehalt an Rohprotein angereichert wird, um für die Fütterung von Monogastriern geeignet zu sein, während die verbleibende proteinarme Fraktion noch für Wiederkäuer geeignet ist.

Die verbleibende Rest-Fraktion, deren Gehalt an Rohprotein auf ganz geringe Anteile verringert ist zugunsten eines sehr hohen Rohfasergehaltes, der gegen über dem ursprünglich eingesetzten Extraktionsschrot wesentlich erhöht ist, wird durch zusätzliche Aufschlußverfahren in seiner Verdaulichkeit und Nährwert verbessert, um ein brauchbares Futter für Wiederkäuer abzugeben.

Das Wesen der Erfindung ist, Sonnenblumen-Extraktionsschrot insbesondere konventioneller Qualität in einer speziellen Anlage mit einem geeigneten mühlentechnischen Verfahren so aufzubereiten, daß die Schalen vom Kernmaterial getrennt werden. Ziel ist es, den Schalenanteil in den neuen Produkten präzise einzustellen, denn über den Schalenanteil läßt sich die Verdaulichkeit der organischen Substanz steuern. Von der Verdaulichkeit der organischen Substanz hängt wiederum die Eignung des Produktes für die Ernährung der einzelnen Tierarten ab.

Bisher hat es nicht an Versuchen gefehlt, Verfahren zu entwickeln, die Schalen vom Kernmaterial abzutrennen. Keines dieser Verfahren hat sich als wirksam erwiesen und Produkte geliefert, die brauchbar für die Ernährung der Monogastrier - Geflügel und Schweine - waren. Dementsprechend hat keines dieser Verfahren Eingang in die Praxis gefunden.

Das erfindungsgemäße Verfahren und die erfindungsgemäße Anlage eignen sich zur gewerblichen Anwendung. Mit Hilfe dieses Verfahrens und der Anlage ist es erstmals möglich, den Schalenanteil im Extraktionsschrot von Sonnenblumensaat so exakt zu steuern, daß zwei Fraktionen anfallen:
- Eine Faktion mit niedrigem Schalenanteil und hohem Eiweißgehalt, sie entspricht hinsichtlich der verdaulichen organischen Substanz und der biologischen Wertigkeit der Proteine den Anforderungen für Geflügel und Schweine. Dieses Produkt ist praktisch dem Marktführer Soja-Extraktionsschrot gleichwertig.
- Eine Fraktion mit hohem Schalenanteil und geringerem Eiweißgehalt, dieses Produkt ist für die Ernährung der Wiederkäuer geeignet.
- Zusätzlich werden in einem gesonderten Verfahren die Schalen - an sich ein Abfallprodukt - mit Lauge behandelt, die Gerästsubstanzen werden aufgeschlossen und damit werden auch die Schalen energetisch nutzbar für die Ernährung der Wiederkäuer.

Das erfindungsgemäße Verfahren und die erfindungsgemäße Anlage liefern Proteinträger verschiedener Qualitäten, die in der praktischen Tierernährung brauchbar sind. Diese Produkte sind ernährungsphysiologisch exakt auf die Anforderungen der verschiedenen Nutztierarten eingestellt. Erstmals steht damit ein Proteinträger aus Sonnenblumen-Saat zur Verfügung, der voll für Monogastrier tauglich ist. Darüber hinaus wird erreicht, daß die bei der Verarbeitung von Sonnenblumen-Saat anfallenden Beiprodukte vollständig, das heißt einschließlich der Schalenabfälle, in der Tierernährung genutzt werden können.

Erfindungsgemäß gelingt es, ein Produkt aus dem Bereich nachwachsender Rohstoffe, nämlich Sonnenblumen, insbesondere einjähriger Pflanzen, die reich an Fett und Proteinen sind, in zwei Qualitäten durch entsprechende Veredelung des aus der Ölgewinnung anfallenden Extraktionsschrotes zu schaffen.

Erfindungsgemäß wird ein technologisches hochwertiges industrielles Fabrikationsverfahren geschaffen, mit einem produktschonenden, betriebssicheren, mechanischem Behandlungsprozeß des Futtermittels, nämlich Extraktionsschrotes ohne zusätzliche große Materialerhitzung, so daß sämtliche natürlichen Inhaltsstoffe ungeschädigt erhalten bleiben. Es werden naturreine Futtermittel erhalten, und zwar durch ein umweltfreundliches energiesparendes wirtschaftliches Verfahren zur Aufbereitung und Nährwertverbesserung mit erhöhter Verdaulichkeit aus Sonnenblumen-Extraktionsschrot, wertvollen Rohstoffen für Nutztiere erhalten.

Vorteilhafte Weiterbildungen des erfindungsgemäßen Verfahrens sind den Ansprüchen 2 bis 9 entnehmbar. Insbesondere wird vorgeschlagen, die Teilchen des Extraktionsschrotes vor dem Sieben zu zerkleinern, danach mittels Sieben nach Korngrößen zu trennen und aus der Korngrößenfraktion mit den jeweils großvolumigeren Teilchen mittels Windsichten die Teilchen unter Berücksichtigung ihres spezifischen Gewichtes zu trennen, wobei die einzelnen Verfahrensschritte bzw. Verfahrensschrittfolgen mindestens einmal, insbesondere mehrfach wiederholt werden, ehe die abgetrennten Teilchen aus dem Behandlungsprozeß ausgeschleust und der jeweils zugehörigen zu bildenden Fraktion, nämlich entweder rohproteinreich oder rohfaserreich zugeführt werden.

Die mittels des Windsichtens erhaltenen leichten Teilchen werden im wesentlichen von Schalenteilen (Spelzen) gebildet und werden abgesaugt und zu einer einen hohen Rohfasergehalt von über 15 % enthaltenen Fraktionen aufgesammelt, während die Teilchen mit dem höheren spezifischen Gewicht im wesentlichen von den Kernteilchen bzw.

Kernteilchen mit anhaftenden Schalen gebildet werden und durch Schwerkraft abgeschieden werden, ggf. einen weiteren Verfahrenszyklus durchlaufen und zu einer einen hohen Rohproteingehalt von über 40 % enthaltenden Fraktion gesammelt werden.

Erfindungsgemäß kann eine rohproteinreiche Fraktion mit einem Anteil an Rohprotein über 40 % und einem Rohfasergehalt unter 10 % durch Behandlung und Abtrennung erhalten werden, der einem Soja-Extraktionsschrot in der Zusammensetzung angenähert ist und für die Fütterung von Monogastriern geeignet ist.

In Weiterbildung der rohfaserhaltigen Fraktion mit einem Anteil an Rohfasern von mindestens 15 % wird vorgeschlagen, diese anschließend einem Laugen-Aufschließungsverfahren, insbesondere mittels Natron-Lauge zu unterziehen, wodurch der Energiewert und die Verdaulichkeit des Materials erhöht wird, so daß es für die Fütterung von Wiederkäuern noch besser geeignet ist.

Insbesondere wird vorgeschlagen, die rohfaserhaltige Fraktion in einem Zweistufenprozeß aufzuschließen, wobei in der ersten Stufe ein erster Materialstrom aus der Fraktion mit flüssiger Natron-Lauge benetzt und gemischt wird und anschließend mit einem zweiten Materialstrom aus der Fraktion intensiv vermischt und homogenisiert wird und danach ggf. nach Zwischenlagerung in einer zweiten Stufe das aufbereitete Gemisch einem Konditionierer mit zusätzlicher Dampfzufuhr zwecks Temperierung und Feuchtigkeitssteigerung des Gemisches zugeführt und anschließend in einer Presse bei einer Preßtemperatur im Bereich von etwa 40 - 65 °C zu Pellets verpreßt wird und die erhaltenen Pellets anschließend unter annäherndem Feuchtigkeitserhalt auf Raumtemperatur abgekühlt werden.

Das erfindungsgemäße Verfahren des Behandelns, Strukturierens und Veredelns von konventionellem Sonnenblumen-Extraktionsschrot und Herstellen von zwei unterschiedlichen Fraktionen unterschiedlicher Zusammensetzung erfolgt bevorzugt in einem geschlossenen System, wobei es kontinuierlich durch entsprechende Steuerung und Regelung und Vorratshaltung mit Zwischenbehältern, um das Leerlaufen der Vorrichtungsteile zu vermeiden, einschließlich die einzelnen Vorrichtungsteile verbindender Förderbahnen, die mittels Schwerkraft oder Druckluft oder Absaugluft arbeiten, durchgeführt wird.

Eine Anlage zum Durchführen des Verfahrens des Strukturierens und Veredelns des Sonnenblumen-Extraktionsschrotes zum Erhalten von zwei Fraktionen unterschiedlicher Qualitäten und Quantitäten umfaßt mindestens zwei aufeinanderfolgende Kombinationen aus einer Siebvorrichtung, einem Windsichter und einem Ventilator mit Abscheider mit Austragsschleuse, wobei jede Siebvorrichtung mit dem zugeordneten Windsichter für den Transport der großvolumigen, das Sieb nicht passierenden Teilchen und mit der nachfolgenden Siebvorrichtung für den Abtransport der das Sieb passierenden kleinervolumigen Teilchen mittels Verbindungsleitungen verbunden ist. Mindestens die zweite und jede folgende Siebvorrichtung weist zusätzlich eine im Inneren angeordnete rotierende Schlagvorrichtung auf und jeder Windsichter ist mit einem zugeordneten Ventilator und Abscheider über eine Absaugleitung für das Absaugen der großvolumigen, spezifisch leichten Teilchen verbunden, wobei die abgesaugten Teilchen über die Austragsschleuse einem Sammelbehälter für die rohfaserhaltige Fraktion über die Verbindungsleitungen zuführbar sind. Des weiteren ist ein Turboabscheider vorgesehen, dem die Abluftleitungen der Ventilatoren zugeführt sind. Von dem Ausgang jedes Windsichters bis auf den letzten Windsichter führt eine Verbindungsleitung zu einer Zerkleinerungsvorrichtung, wobei der Ausgang der letzten Siebvorrichtung und der Ausgang des letzten Windsichters direkte Verbindungsleitungen zu dem jeweiligen Sammelbehälter für die proteinhaltige Fraktion bzw. für die rohfaserhaltige Fraktion aufweisen und der Ausgang der Zerkleinerungsvorrichtung mit dem Eingang der ersten Siebvorrichtung über eine Förderrichtung verbunden ist, für einen erneuten Umlauf des noch nicht ausreichend strukturierten Materials.

Vorteilhafte Weiterbildungen der Anlage sind den kennzeichnenden Merkmalen der Ansprüche 10 bis 23 entnehmbar.

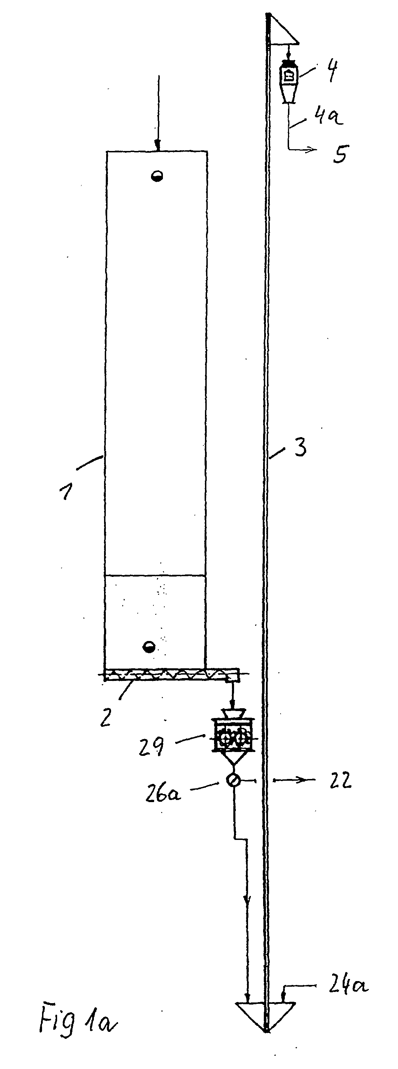

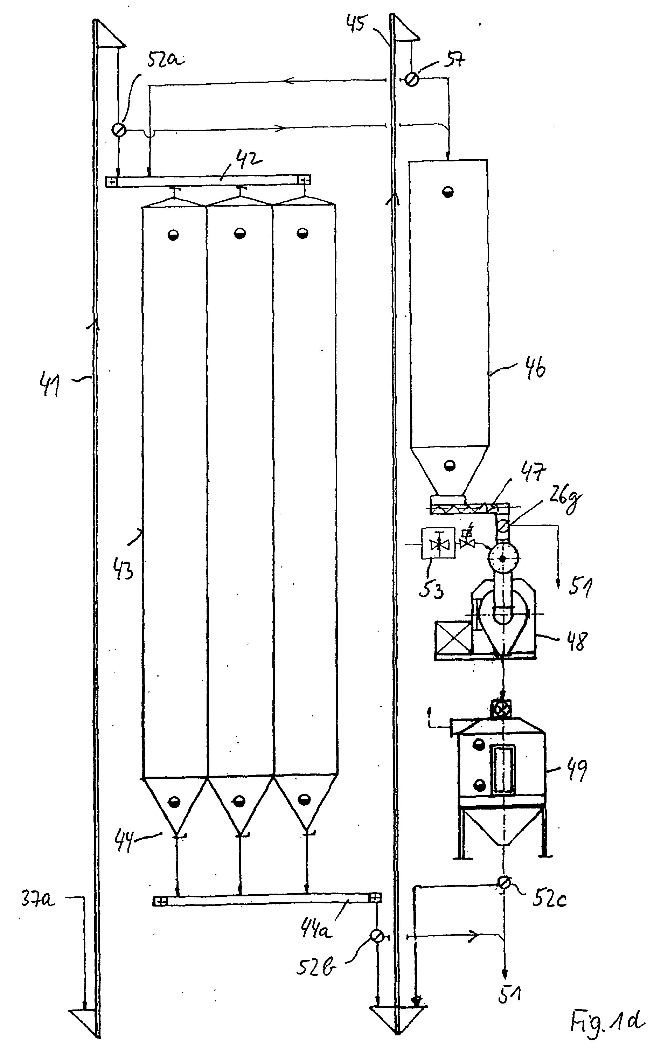

Die vorteilhaften Weiterbildungen und erfindungsgemäßen Ausbildungen der Anlage zum Herstellen von zwei Fraktionen unterschiedlicher Qualität und Quantität zum einen für die Tierernährung von Monogastriern und zum anderen für die Tierernährung von Wiederkäuern aus Sonnenblumen-Extraktionsschrot werden nachfolgend in Verbindung mit einer schematisch dargestellten Anlage in der Figur 1a und 1d beschrieben.

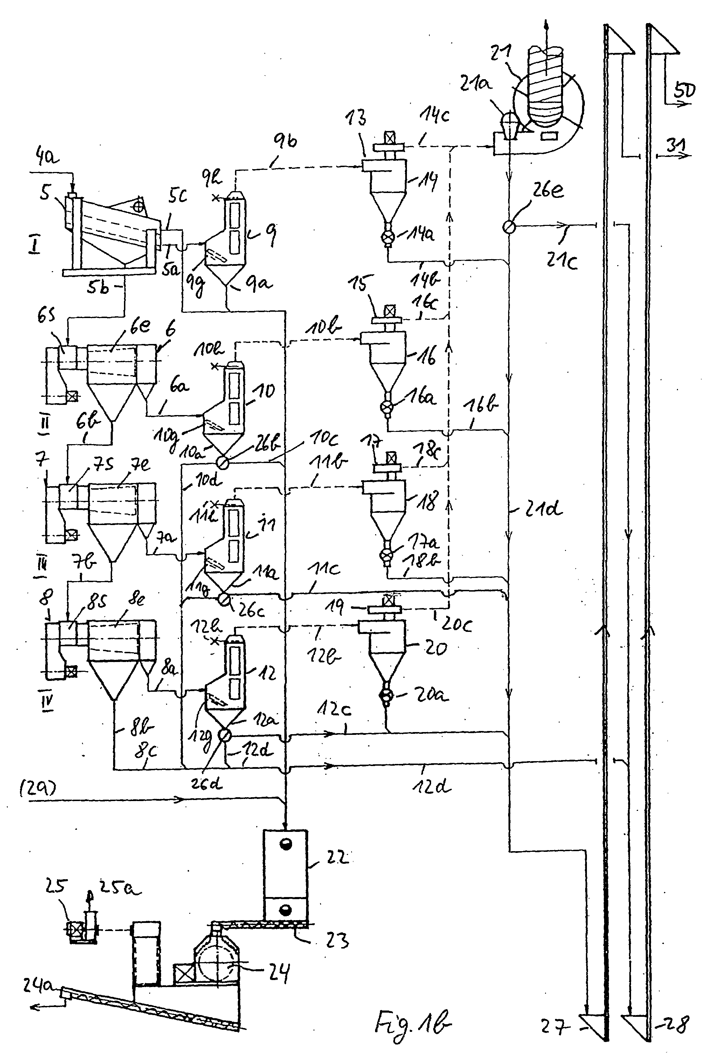

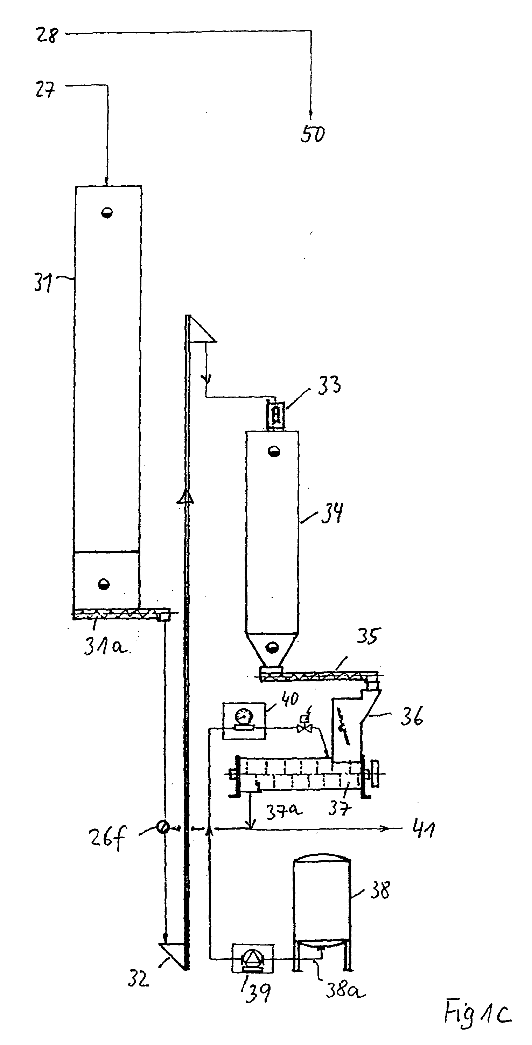

Mit der erfindungsgemäßen Anlage wird der bei der Ölgewinnung aus Sonnenblumensaat als Rückstand erhaltene Extraktionsschrot weiterverarbeitet und vollständig zu zwei vollwertigen für die Tierernährung einsetzbaren Fraktionen verarbeitet. Sonnenblumen-Extraktionsschrot weist ein Schüttgewicht von ca. 300 bis 350 kg/m³ auf, während die Sonnenblumensaat selbst noch ein Schüttgewicht von etwa 400 bis 440 kg/m³ aufweist. Um ein Tierfutter für Monogastrier zu erhalten, muß der Extraktionsschrot nicht nur eine feinere, griesige Struktur erhalten, sondern auch der Rohproteingehalt auf über 40 % angehoben werden und der Rohfasergehalt auf den unteren Grenzwert unterhalb 10 % gesenkt werden. Um den Sonnenblumen-Extraktionsschrot für Wiederkäuer als Tierfutter geeignet zu machen, sollte eine grobe Struktur erhalten bleiben, jedoch eine wesentlich höhere Auffaserung erreicht werden und eine Aufbesserung der Verdaulichkeit der Sonnenblumenschalen insbesondere durch Laugenaufschluß erreicht werden. Eine Produktionsanlage in Kompaktbauweise im Baukastensystem, die den jeweiligen örtlichen Verhältnissen in ihrer Größe angepaßt werden kann, ist schematisch in den Figuren 1a, 1b, 1c, 1d dargestellt, wobei das Verarbeitungsverfahren und Herstellungsverfahren der beiden Fraktionen in einem geschlossenen System stattfinden kann. Die Materialien werden über Rohre, Schnecken, Trogkettenförderer und Elevatoren beispielsweise von einer Vorrichtung bzw. Station zur nächsten gefördert.

Der Prozeßablauf beginnt mit dem Vorratsbehälter 1 für Sonnenblumen-Extraktionsschrot, der mit einem Kontrollsystem Voll- und Leermeldung zur Überwachung ausgerüstet ist. Das Fassungsvermögen ist nach der gewünschten Produktionsleistung ausgelegt und umfaßt einen Vorrat von mindestens 24 Stunden, um eine störungsfreie, kontinuierliche Produktion sicherzustellen. Der Vorratsbehälter ist ausgangsseitig mit einer Dosierschnecke 2 für die Austragung des Materials versehen, wobei die Dosierschnecke einen stufenlos regelbaren Antrieb aufweist für eine gleichmäßige mengenregulierbare Materialaustragung.

Der für die Aufbereitung zur Verfügung stehende Sonnenblumen-Extraktionsschrot, wie er von der Ölmühle als Abfallprodukt geliefert wird, unterliegt starken Rohstoffschwankungen in der Zusammensetzung mit unterschiedlichen Anteilen an Materialverklumpungen. Daher wird der kontinuierlich aus der Austragsschnecke 2 ausgetragene Sonnenblumen-Extraktionsschrot unmittelbar einer Vorrichtung 29 zum Klumpenlösen zugeführt, die mit Passierwerkzeugen und einem Siebeinsatz, durch welchen das feinzerteilte Material fällt, ausgestattet ist. Für die Weiterverarbeitung wird das Material einem ersten Zweiwegeklappenkasten 26a zugeführt und wahlweise entweder dem Vorbehälter 22 der Zerkleinerungsvorrichtung 24 in Gestalt einer Spezialmühle zugeleitet oder aber über den Elevator 3 durch den Magnetabscheider 4 zu der ersten Station der Siebvorrichtung 5 gefördert.

Das ausgetragene Material, der Extraktionsschrot wird mittels einer Fördervorrichtung, beispielsweise dem Elevator 3, bestehend aus einem Becherfördersystem, das auf einem Gummigurt montiert wird, zu der ersten Station, der Siebvorrichtung 5 gefördert. Kurz vor Einlauf in die Siebvorrichtung 5 über ein Laufrohr 4a ist ein Rohrmagnet 4 in dasselbe eingebaut mit einem Magnetkern zur sicheren Metallabscheidung von möglicherweise in dem Extraktionsschrot enthaltenen Metallteilchen. Der Materialstrom wird in dem Rohrmagneten verteilt und über den kegelförmigen, im Inneren angeordneten Magnetkern zur Metallabscheidung geführt. Ein Doppelmagnetkern bewirkt mit den großen magnetischen Feldern eine starke Haftkraft, so daß Eisenverunreinigungen mit Sicherheit entfernt werden.

Es folgen mehrere Verfahrensstufen zur Strukturierung, d.h. Zerkleinern und Trennen von den an den Schalen anhaftenden Kernteilen und Sichten der enthaltenen Teilchen, wobei jede Verfahrensstufe eine Siebvorrichtung, einen Windsichter, Ventilatoren und Abscheider mit Schleusen umfaßt.

Die erste Siebvorrichtung 5, zu der das aus dem Vorratsbehälter 1 geförderte Material gelangt, ist als Schwingsieb ausgebildet und kann in der Siebneigung zwischen 5 bis 17° verstellt werden. Es hat einen Wurfwinkel und ermöglicht die gleichmäßige Materialverteilung auf die ganze Siebbreite; eine praktische Anpassung der Siebgenauigkeitsanforderungen ist möglich. Die erste Siebvorrichtung 5 ist als Doppeldeck-Schwingsieb mit zwei übereinander mit Abstand angeordnete Siebeinlagen ausgerüstet und weist des weiteren eine Reinigung mittels Gummikugeln auf, wodurch die Verstopfungsfreiheit der Siebbespannung garantiert wird und zugleich die Absiebgüte erhöht wird.

Die obere Siebanlage der ersten Siebvorrichtung 5 bildet eine erste Trennpassage, wobei die groben Schalenteilchen einschließlich anhaftender Kernteilchen über das oberste Sieb weiterlaufen und über die Verbindungsleitung 5c direkt zu dem Vorbehälter 22 der Zerkleinerungsvorrichtung 24 gefördert werden.

Die zweite untere Siebeinlage bildet wiederum eine Trennpassage für das von der ersten Siebeinlage passierende Material. Mittelgroße Schalenteile und grobe Kernanteile gleicher Größe passieren die zweite Siebeinlage nicht, sondern werden am Ende der unteren Siebeinlage wiederum ausgetragen und gelangen über die Verbindungsleitung 5a zu dem zugeordneten Windsichter 9. In dem Windsichter 9 erfolgt eine Trennung der Teilchen nach spezifischem Gewicht in der Weise, daß die schweren Kernteile und auch Schalenteile mit anhaftendem Kernmaterial zur Weiterbehandlung aus dem Windsichter schwerkraftmäßig nach unten ausgetragen werden und über die Verbindungsleitung 9a, 9c wiederum dem Vorbehälter 22 für die Zerkleinerungseinrichtung 24 zugeführt werden. Die spezifisch leichten im wesentlichen rohfaserhaltigen Schalenteile gleicher Größe hingegen werden aus dem Windsichter von dem nachfolgenden Ventilator 13 und Abscheider 14 über die Absaugleitung 9b abgesaugt und über die Austragsschleuse 14a und Verbindungsleitung 14b des Abscheiders zur Weiterbearbeitung in eine Verbindungsleitung 21d zu einer Fördervorrichtung 27, beispielsweise dem Elevator 27, zu dem Sammelbehälter 31 gefördert. Hierbei handelt es sich um die im wesentlichen nur noch rohfaserhaltigen Schalenteilchen, d.h. im wesentlichen eine rohfaserhaltige Fraktion, die in dem Sammelbehälter 31 gesammelt wird, die für Wiederkäuer bestimmt ist.

Die vorliegende Anlage enthält vier Verfahrensstufen I, II, III, IV, die jeweils eine Siebvorrichtung 5, 6, 7, 8,, einen Windsichter 9, 10, 11, 12 und einen Ventilator 13, 15, 17, 19 mit Abscheider 14, 16, 18, 20 und Austragsschleuse 14a, 16a, 18a, 20a umfassen. Die Siebmaschine und der Windsichter stellen eine Kombination für zwei verschiedene Arten des Trennens der Teilchen dar, wobei Leichtgut-Teilchen, Schalen, Spelzen verschiedener spezifischer Gewichte in den einzelnen Passagen - Verfahrensstufen - aus dem körnigen Extraktionsschrot abgesaugt werden. Die jeweils aus der zugehörigen Siebvorrichtung 5, 6, 7, 8 in den zugeordneten Windsichter 9, 10, 11, 12 über die Verbindungsleitung 5a, 6a, 7a, 8a gelangenden Teilchen werden über einen verstellbaren Einlauf über eine Vibrationsrinne 9g, 10g, 11g, 12g in den Windsichter 9, 10, 11, 12 in einen regelmäßigen Produktschleier über die gesamte Breite in den Windsichter geführt. Eine verstellbare Luftklappe 9h, 10h, 11h, 12h reguliert die Windstärke und Luftmenge, es werden genau dem jeweiligen Produkt der jeweiligen Passage entsprechende Werte eingestellt. Die Abscheidung der leichten rohfaserhaltigen Teilchen, Spelzen erfolgt durch Absaugung aus dem Windsichter nach ihrem spezifischen Gewicht. Die Trenngrenze kann während des Betriebes den Anforderungen jederzeit angepaßt werden. Es können sowohl der Produktstrom als auch die Luftgeschwindigkeit und Luftdurchgangsmenge stufenlos reguliert werden. Zu jedem Windsichter mit eigener Luftversorgung ist ein Niederdruckventilator 13, 15, 17, 19 einschließlich Zyklonabscheider 14, 16, 18, 20 und Austragsschleuse 14a, 16a, 18a, 20a zugeordnet zur ununterbrochenen Absaugung der Spelzen aus dem Windsichter und Abscheidung im zuständigen Zyklon, und hier über die Austragsschleuse ausgetragen und wahlweise weitertransportiert. Die Abluft aus den Windsichtern und Zyklonabscheidern geht über Verbindungsleitungen 14c, 16c, 18c und 20c, die zusammengeführt werden, zur Reinigung in den gemeinsamen Turboabscheider 21.

Der Turboabscheider 21 ist vielseitige einsetzbar und ersetzt die konventionellen Zyklone. Bei großen Luftmengen kann er auf kleinstem Raum untergebracht werden. Der Abscheider ist wartungsfrei, da keine beweglichen Teile vorhanden sind. Das Staub-Luftgemisch wird von den Ventilatoren 13, 15, 17, 19 in den Turboabscheider 21 gedrückt und in dessen schneckenförmiges Gehäuse geleitet. Durch die Form des Gehäuses wird die Luft in Rotation versetzt, wobei die Staubteile an die Gehäuseinnenwand geworfen und mit einem Teilluftstrom durch eine spaltförmige Öffnung in den Nachabscheider 21a geführt werden. Der fast staubfreie Hauptluftstrom, der am Spalt vorbei strömt, passiert die Lamellen. Durch die hier plötzliche Änderung der Luftstrombewegungsrichtung wird der Reststaub in den rotierenden Strom zurück geleitet. Der Nachabscheider arbeitet im Prinzip wie ein Zyklon und besteht aus einem Zentralrohr, Zyklonkopf und einem zylindrischen Mantel. Die Luft wird beim Zyklon tangential eingeführt. Der hier abgeschiedene Staub wird mit Überschußluft abgeführt. Der Abscheidegrad des Turboabscheiders liegt bei Einhaltung des minimalen und maximalen Luftvolumens wesentlich höher als bei herkömmlichen Zyklonen.

Das Material, das in der ersten Siebvorrichtung 5 durch das zweite Sieb hindurch fällt, in Form von gröberem und feinkörnigem Material einschließlich Spelzen und bereits nach Korngröße vorsortiert, wird einer nachfolgenden Siebvorrichtung 6 über die Verbindungsleitung 5b zugeführt. Der Siebdurchfall jeder Siebmaschine 5, 6, 7, 8 wird einer jeweils nachfolgenden Siebmaschine 6, 7, 8 über die entsprechenden Verbindungsleitungen 6b, 7b zugeführt.

Die der ersten Siebvorrichtung 5 nachfolgenden Siebvorrichtungen 6, 7, 8 der Stufe II, III und IV dienen zur Trennsichtung des Extraktionsschrotes von den Spelzen, insbesondere auch der Ablösung der Kernteile von den Schalen mittels der Schlagvorrichtung und Bürsten. Die Stebvorrichtungen 6, 7, 8 weisen jeweils einen Einlauftrichter für das über die Verbindungsleitungen 5b, 6b, 7b ankommende Material auf. Durch eine Förderschnecke 6s, 7s, 8s wird das Material in das Innere eines konischen Siebkorbes gebracht, in dem ein Schlagkreuz 6e, 7e, 8e rotiert, das mit Wirbelleisten ausgerüstet ist, die am ganzen Umfang das Siebgut durch die Siebe wirbeln. Des weiteren sind am Schlagkreuz Bürsten am Umfang angeordnet, die eine Verstopfungsfreiheit der Siebbespannung gewährleisten und eine gute Trennung von Fein- und Grobteilen sicherstellen. Die Möglichkeit des Einsatzes verschiedener Sieblochungen angepaßt an die gewünschte Korngröße jeder Siebpassage 6, 7, 8 ist gegeben. Die Siebkörbe lassen sich binnen weniger Minuten auswechseln, ohne daß die Demontage von irgendwelchen mechanischen Teilen notwendig ist.

Die Verbindungsleitungen 5c, 9c, 10c, 11c werden zusammengeführt zu dem Vorbehälter 22.

Die Siebvorrichtung 5 der ersten Stufe I hat zwei Trennpassagen, nämlich das obere und das untere Sieb, die Siebvorrichtung 6 bildet eine dritte Trennpassage. Das zur Windsichtanlage 10 über die Verbindungsleitung 6a gelangende Material gleicher Korngröße, jedoch unterschiedlicher spezifischer Gewichte wird in dem Windsichter 10 nach den spezifischen Gewichten aufgetrennt, wobei die jeweils gleich großen, spezifisch leichten Schalenteile über den nachfolgenden Ventilator 15 und Abscheider 16 abgesaugt und über die Austragsschleuse 16a zur Weiterverarbeitung über die Verbindungsleitung 16b, 21d der Förderbahn 27 zum Sammelbehälter 31 geführt werden. Die schwereren Teilchen, welches die proteinreichen Kernteilchen im wesentlichen umfaßt, werden hingegen aus dem Windsichter (10) über den Ausgang 10a ausgetragen und können wahlweise entweder mittels eines Klappenkastens 26b über die Verbindungsleitung 10c dem Vorbehälter 22 der Zerkleinerungsvorrichtung 24 oder aber bereits als Endprodukt über die Verbindungsleitung 10d, 12d der Förderbahn 28, beispielsweise einem Elevator und von hier zu einem Sammelbehälter 50 für die proteinreiche Fraktion zum Aufsammeln der proteinreichen Teilchen zugeführt werden, die das Endprodukt für Monogastrier bildet.

Die Verbindungsleitungen - Austragsleitungen 14b, 16b, 18b, 20b und 12c sowie die vom Nachabschneider 21a kommende Leitung 21d nach der Klappe 26e werden zusammengeführt zu der Fördereinrichtung 27, die zum Sammelbehälter 31 führt. Die Verbindungsleitungen 21c, 8c, 12d, 11d, 10d, die zur Fördereinrichtung 28 führen, werden ebenfalls zusammengeführt.

Es ist auch möglich, die aus dem dritten Windsichter 11 unten herausfallenden Teilchen über den Klappenkasten 26b und die Verbindungsleitung 11c direkt der Verbindungsleitung 21d zum Sammelbehälter 31 zuzuführen, anstelle der Zerkleinerungsvorrichtung 22, 24.

Bei unterschiedlicher Produktkorngröße und jeweils separater regulierbarer Luftversorgung findet im folgenden stufenweisen Prozeßablauf die gleiche systematische Materialtrennung statt. Die vierte und fünfte Trennpassage ist mit den Siebvorrichtungen 7 und 8, die mit den Windsichtern 11 und 12, den Ventilatoren 17 und 19, Abscheidern 18 und 20 mit Austragsschleusen 18a und 20a in den Stufen III und IV verwirklicht, die ebenso wie die Stufe II aufgebaut sind.

Hinter den Windsichtern 10, 11, 12 befinden sich jeweils Klappkästen 26b, 26c, 26d an welche jeweils zwei ausgangsseitige Verbindungsleitungen 10c, 10d; 11c, 11d; 12c, 12d angeschlossen sind, die es ermöglichen, das ausgeschleuste Produkt nach Beschaffenheit wahlweise zu steuern, entweder nochmals in den Strukturierungsprozeß zurück zur weiteren Zerkleinerung und Sichtung oder aber je nach Beschaffenheit zu den Sammelbehältern 50 bzw. 31 für die beiden verschiedenen Fraktionen.

Die Abluft wird von den Ventilatoren 13, 15, 17 und 19 in den Turboabscheider 21 gedrückt.

In dem Turboabscheider wird auch aus dem Staub-Luft-Gemisch der Staub abgeschieden und die gereinigte staubfreie Luft ins Freie gefördert. Der anfallende Staub läuft aus dem Nachabscheider 21a wahlweise über einen Klappkasten 26e und wird gemäß der Qualität entweder über die Leitung 21c zur Förderbahn 27 zu dem Sammelbehälter 31 für die rohfaserhaltige Fraktion für Wiederkäuer oder aber über die Leitung 21d zur Förderbahn 28 in den Sammelbehälter 50 für die proteinreiche Fraktion für Monogastrier geleitet.

Mit diesem ersten Teil der Anlage und des Aufbereitungsprozesses wird der Sonnenblumen-Extraktionsschrot industriell entsprechend der Anforderung an die Tierernährung für Monogastrier und Wiederkäuer aufbereitet und in zwei Fraktionen aufgetrennt. Die an der Schale haftenden Kernteile werden schonend gelöst, Materialverklumpungen mittels der Vorrichtung zum Klumpenauflösen strukturiert und zerkleinert und die Sonnenblumenschalen grob zerkleinert unter Beibehaltung und Verbesserung der Faserstruktur, auch unter Berücksichtigung der Rohstoffschwankungen unterschiedlicher Sorten.

Die sich in dem Vorbehälter 22 befindenden zusammengelaufenen Teilchen aus der Trennsichtung der Siebvorrichtungen und Windsichter werden mittels einer Dosierschnecke 23, die über einen stufenlos regelbaren Antrieb verfügt, in einem gleichmäßigen Materialfluß der Mühle 24 zugeführt. Der Vorbehälter 22 ist mit einem Voll- und Leermelder ausgerüstet und sichert die ununterbrochene Materialversorgung der Dosierschnecke 23. Die Aufbereitungspassage mit verschiedenen verfahrenstechnischen Vorrichtungen zur Verarbeitung umfaßt eine Spezialmühle 24 mit ausgewogener Mahlplattenkonstruktion mit geriffelten Prallplatten und damit entsprechender Mahltechnik und Aufbereitungsvorgängen mit variabler Rotorumfangsgeschwindigkeit, so daß eine gleichmäßige Struktur des Endproduktes erreicht wird und zugleich in dem Durchgang die restlichen Kernteile von den Schalenteilen getrennt werden sowie die Kernteile im Mahlprozeß zerkleinert werden, um eine rieselfähiges Produkt griesiger Mahlstruktur mit einer Kornbandgröße für Monogastrier geeignet zu erhalten. Durch die große Vielzahl kleiner Partikel und der Form erhöht sich besonders die spezifische Oberfläche und Beschaffenheit, eine weitere vorteilhafte Verbesserung der Verdaulichkeit der Teilchen für Monogastrier, wobei die Kornbandgröße zwischen 700 und 200 µm Analysensiebe nach ISO DIN 4188 liegt. Durch die Wahl der Mühlensiebeinlage mit bestimmten Lochblechen und großer Siebfläche wird die Faserstruktur der groben Schalen verbessert und damit die Absorptionseigenschaften. Der Effekt der leicht angefaserten Schalenteile bietet weitere Vorteile beim nachfolgenden Laugenaufschlußverfahren der rohfaserhaltigen Fraktion. Die Vermahlungsstruktur ist entscheidend für die Qualität des Endproduktes für Wiederkäuer. Die Zerkleinerungsanlage, die zugleich Aufbereitungsanlage ist, wird mit einer Aspirationsanlage ausgerüstet, die den erzeugten Luftüberdruck in der Mahlkammer vermeidet, sie umfaßt einen Ventilator und Aufsatzfilter 25. Das Material wird auf diese Weise schneller abgeführt und rotiert nicht mit. Damit wird eine gewünschte gleichmäßige Struktur des Mahlgutes erreicht.

Der Anteil des Extraktionsschrotes vom Überlauf der Siebtrennpassagen der Siebvorrichtungen geht nach Durchlaufen der letzten Strukturierungs-Aufbereitungs-Passage aus der Mühle 24 über eine Austragsförderschnecke 24a zu einer Fördereinrichtung 3, beispielsweise einem Elevator zur ersten Trennpassage der ersten Schiebvorrichtung 5 zurück und durchläuft nochmals den Aufbereitungsprozeß gemäß den Stufen I bis IV.

In dem Sammelbehälter 50 ist das proteinreiche Kernmaterial mit nur noch geringen Anteilen an Schalen - Rohfaser - zu einer Fraktion griesiger Struktur aufgesammelt, die direkt als Tierfutter für Monogastrier verwendbar ist.

Die in dem Sammelbehälter 31 aufgesammelte Fraktion mit wesentlich höherem Rohfasergehalt hingegen, die für Wiederkäuer bestimmt ist, kann nachfolgend einer weiteren Veredelung und Verbesserung zur Erhöhung des Energiewertes und Nährwertes durch eine Aufschließung der Rohfasern unterworfen werden. Das Aufbereitungs- und Laugenaufschlußverfahren für diese rohfaserhaltige Fraktion, die im ersten Anlagenteil ausgetrennt wurde, ist diesem Material angepaßt. Das Laugenaufschlußverfahren kann einstufig oder zweistufig durchgeführt werden. Beim einstufigen Verfahren ist die Reaktionszeit relativ lang. Es wird der zweistufige Prozeß bevorzugt. Bei dem Zweistufen-Prozeß wird der Aufschluß der Rohfaser, insbesondere der Spelzen und Schalenteilchen in Verbindung und Kombination mit einem Pelletierverfahren verbessert und durch Druck, Reibung und Temperatur entsteht eine Selbsterhitzung, in den Pellets, die die Reaktionszeit des Laugenprozesses wesentlich verkürzt und zugleich auch die benötigte Laugenmenge reduziert. Es entstehen bessere Schütteigenschaften des so behandelten Materials, eine Volumenverringerung durch die Pelletierung, einfache Produktlagerung, keine Materialentmischungen und günstige Transportkosten.

Darüber hinaus ist es auch möglich, zusätzlich zu der aufgesammelten rohfaserhaltigen Fraktion auch noch Ballastkomponenten, wie Sonnenblumenköpfe und -stengel mit zu verarbeiten, die zusätzlich den Energiewert dieses Futters für Wiederkäuer erhöhen. Diese Ballastkomponenten, in entsprechend zerkleinertem Zustand, könnten z.B. dem Sammelbehälter 31 direkt zugeführt werden.

Der Extraktionsschrot bzw. die in ihm enthaltenen Schalenteile wurden bereits durch den Extraktionsprozeß in der Ölmühle vorbereitet, wobei der Wachsmantel der Sonnenblumensaat verändert wurde und das Wachs auch nicht mehr vorhanden ist. Der Wachsanteil und das Lösungsmittel Hexan befinden sich in dem gewonnenen Ölgemisch zur Weiterverarbeitung. Die in dem eingangs geschilderten mechanischen Behandlungsprozeß gut strukturierte Fraktion von Sonnenblumen-Extraktionsschrot aus der Aufbereitungsanlage befindet sich in dem Sammelbehälter 31, der eine kontinuierliche, sichere Arbeitsweise der Gesamtanlage gewährleistet. Der Sammelbehälter 31 reguliert eventuell auch über mehrere Stunden eine unvorhergesehene Produktionsunterbrechung. Der Produktionsprozeß sowie auch die Maschinen sind ausgelegt, eine ununterbrochene Arbeitsweise über viele Tage zu erbringen. Der Sammelbehälter 31 ist mit einem Kontrollsystem Voll- und Leermeldung ausgerüstet zur Materialinhaltsüberwachung. Die Austragsschnecke 31a arbeitet diskontinuierlich zur Materialbefüllung des Vorbehälters 34 mittels des Elevators 32 und wird automatisch von dem Voll- und Leermelder des Vorbehälters 34 angesteuert. Am Einlaufdosier-Vorbehälter 34 befindet sich noch ein starker Rohrmagnet 33, aufgebaut wie der Rohrmagnet 4, um nochmals möglicherweise vorhandene Eisenteilchen aus dem Tierfutter zu entfernen.

Der Vorbehälter 34 einschließlich Voll- und Leermelder für die Produktionskontrolle ist ausgangsseitig mit der Austragdosierschnecke 35, die mit einer Frequenzsteuerung regelbar ist, für eine kontinuierliche gleichmäßige Zuspeisung zu der Durchlaufwaage 36, wo eine Feststoffverwiegung vorgenommen wird und kontinuierliche Erfassung der Produktmenge als Leitwert für die Laugendosierung, verbunden.

Für die Benetzung mit Lauge ist ein Laugensprüh- und Wirbelmischer 37 mit drei Mischstufen vorgesehen, der verstellbare Mischwerkzeuge und einen geteilten Einlauf aufweist, um Feststoffe mit Flüssigkeiten homogen zu vermischen. Mit dem kontinuierlichen Wirbelmischverfahren ist es möglich, eine homogene Mischung zwischen den Teilchen und der Lauge für den Laugenaufschluß herzustellen. Die rohfaserhaltige Fraktion, gewonnen aus dem Sonnenblumen-Extraktionsschrot, wird schleierförmig dem Mischzylinder zugegeben und in zwei Materialströme aufgeteilt. Auf den ersten Materialstrom wird die benötigte Menge an flüssiger Natronlauge kontinuierlich prozeßgesteuert präzise aufgegeben. Dieser mit Flüssigkeiten angereicherte Materialstrom wird noch in der ersten Mischstufe des Wirbelmischers mit der restlichen Feststoffmenge, d.h. dem zweiten Materialstrom zusammengebracht. Durch diese Zwei-Stufen-Aufmischung erreicht man einen intensiven Mischprozeß. In der zweiten Mischzone, Verweilzone, erfolgt die intensive Vermischung. Die Materialgeschwindigkeit ist gegenüber der ersten Mischzone verringert. In der dritten Mischzone wird die Materialgeschwindigkeit wiederum erhöht und eine letzte intensive Homogenisierung erreicht.

Die Lauge wird vollautomatisch prozeßgesteuert dosiert. Von einem Laugenhaupttank 38, der versehen ist mit einem Absperrventil 38a, wird mittels einer direkt am Tank angeschlossenen Dosierpumpe mit Überdruckventil 39 die Lauge automatisch exakt zudosiert. Die Dosierung erfolgt mit automatischer exakter Mengenregulierung über ein motorisch betriebenes Dosierventil und Durchflußmengenerfassung mit Fernanzeige über einen magnetischen Induktivzähler 40. Das Präzessionsdosiergerät ist für genaue Beigabe kleinster Mengen ausgelegt, z.B. 0,5 bis 10 %, hier vorzugsweise 3 bis 5 % Natronlauge in Bezug auf das zu benetzende Material im Wirbelmischer, das feinst verteilt aufgesprüht und untergemischt wird.

Nach der Laugensprüh- und Wirbelmisch-Anlage wird das so benetzte Material über die Verbindungsleitung 37a aus dem Wirbelmischer 37 ausgetragen und über ein Fördersystem mittels eines Elevators 41 und eines Trogkettenförderers 42 in einen Produktionssilo 43 oder wahlweise über den Zwei-Wege-Klappkasten 52a direkt zu einem Vorbehälter 46 zur Pelletieranlage geleitet. Der Produktionssilo oder Verweilsilo 43 besteht beispielsweise aus 3 Abstehzellen, sowie Material- Voll- und Leermelder, und ist versehen mit 3 pneumatischen Auslaufschiebern 42. Je Abstehzelle entspricht das Fassungsvermögen beispielsweise einer dreischichtigen Tagesproduktionsleistung im 24-Stunden-Betrieb. Die Verweilzeiten können je nach Beschaffenheit der Rohfaserstruktur wahlweise von 10 bis 75 Stunden in der Zwischenlagerung ausgedehnt werden, um einen größtmöglichen Laugenaufschluß der behandelten Rohfaserteilchen zu erzielen, bevor das Material der Pelletierung zugeführt wird.

Das nach dem Laugenaufschluß erhaltene Rohfasergemisch kann anschließend der zweiten Stufe des Aufschlußprozesses zugeführt werden, die in Verbindung mit einem Pelletierprozeß durchgeführt wird.

Das Gemisch wird aus dem Verweilsilo 43 mittels pneumatischer Siloauslaufschieber 44 über einen Trogkettenförderer 44a zu einem Elevator 45 weiter gefördert und von hier in einen sehr großen Pressen-Vorbehälter 46 geleitet, der mit Material- Voll- und Leermelder ausgerüstet ist. Das Fassungsvermögen des Vorbehälters entspricht beispielsweise einer Pressenleistung von 10 Stunden.

Eine andere Verfahrensmöglichkeit für die Durchführung des Zwei-Stufen-Prozesses zum Aufschluß der rohfaserhaltigen Fraktion besteht auch darin, daß das den Wirbelmischer 37 verlassende Gemisch über die Förderleitung 37a mittels des Klappenkastens 52a an dem Verweilsilo vorbei direkt dem Pressen-Vorbehälter 46 zugeführt wird und erst nach dem Pelletierprozeß in den Verweilsilo 43 über einen Elevator 45 gefördert wird. Während des Pelletierprozesses in dem Preßvorgang erfolgen in der Press-Matrize starke Materialreibungen der zu pelletierenden Fraktion, die eine ansteigende Produkterhitzung erzeugen, verbunden mit hohem Druck. Konstante gleichbleibende Reibung, Temperatur, Druck und Materialfeuchtigkeit während des Preßvorganges erzielen einen mechanisch wirkungsvollen Effekt beim Laugenaufschluß der vorbehandelten rohfaserhaltigen Fraktion. Infolge dessen wird die Verdaulichkeit der Rohfaser für Wiederkäuer erhöht. Diese gezielte Nährwerterhöhung und die Ausbeute der Rohstoffe sind von steigender Bedeutung.

Das in der ersten Stufe des Aufschlußverfahrens im Wirbelmischverfahren im Wirbelmischer 37 aufbereitete rohfaserhaltige Gemisch wird vom Pressen-Vorbehälter 46 über die Dosierschnecke 47 ausgetragen und dem Konditionierer 48 zugeführt und zwar in gleichmäßiger Materialzufuhr. Zur weiteren Aufbesserung der Faserstruktur und des Aufschlußverfahrens ist eine zusätzliche Dampfdosierung 53 mit vorgegebener Temperaturautomatik vorgesehen, die mit dem Konditionierer zusammenwirkt. Damit soll eine geringe Feuchtigkeitszunahme des Materials sowie die bestmögliche konstante Temperatur im Material vor dem Preßvorgang erzielt werden. Auch in dem Konditionierer wird das Material einer Wirbelmischung unterzogen, und der zudosierte Dampf dringt ein und wird homogenisiert gleichmäßig verteilt. Das bewirkt eine Verbesserung des herzustellenden Produktes in Verbindung mit dem Laugenaufschließungsprozeß für die rohfaserhaltige Fraktion. Der Konditionierer ist mit einer Kunststoffinnenkleidung ausgerüstet, das bewirkt einen niedrigen Kraftbedarf und verhindert Materialanbacken und Verkleben und bietet zugleich eine Isolierung gegen Wärmeverlust. Die Dampfdosiervorrichtung 53 umfaßt einen Filter, Dampftrockner, Druckminderer. Das Regelventil wird von der Temperaturautomatik angesteuert. Die Dampfzufuhr kann durch ein Magnet-absperrventil unterbrochen werden. Durch die hydrothermische Wirkung des Konditionierungsvorganges wird eine weitere Absorption der flüssigen Lauge in dem Material erreicht. Diese optimale intensive Vorbereitung trägt wesentlich zum folgenden Laugenaufschluß der Rohfaseranteile in der Pelletierpresse bei. Das Material - Preßgut - wird aus dem Konditionierer gezielt auf der gesamten Ringmatrizen-Oberfläche der Presse durch Zwangsspeisung verteilt. Hierbei ist eine Pelletierpresse mit Ringmatrizen-Oberfläche vorgesehen, in der Matrizenbohrungen vorgesehen sind, in welche das Preßgut mittels Druckrollen gedrückt wird. Hierbei findet zugleich eine Kompaktierung statt. Die so hergestellten Pellets weisen noch eine erhöhte Temperatur von im Bereich von 40 bis 65° C auf. Sie werden daher anschließend in einer Kühleinrichtung 49 auf Raumtemperatur schonend abgekühlt. Die Kühleinrichtung ist beispielsweise als Gegenstrom-Rundkühler ausgebildet und ermöglicht eine dem Produkt angepaßte schonende gleichmäßige Kühlung. Die Pellets werden im Einlauf gleichmäßig verteilt über die gesamte Kühlfläche, so daß keine unregelmäßige Kühlung des Produktes erfolgt. Niveaumelder werden auf die minimale und maximale Verweilzeit fixiert, ein Vormelder verhindert, daß keine Produktüberfüllung entsteht. Falls die hergestellten Pellets anschließend dem Verweilsilo wieder zugeführt werden, um dort eine weitere Reaktionszeit zu lagern, ist es erforderlich, die Pellets entsprechend abzukühlen. Wichtig für eine effektive Kühlung im Gegenstromprinzip sind ein ausgewogenes Verhältnis von Luftmenge, Luftgeschwindigkeit und Verweilzeit sowie geringe mechanische Beanspruchung der Pellets. Die Pellets verlassen die Matrize mit einer Temperatur von z.B. ca. 50° C. Es gilt, die Pellets schonend auf die Temperatur zu bringen, die nahe der Umgebungstemperatur liegen sollte, bei geringstem Feuchtigkeitsentzug. Dies erfolgt vorteilhaft durch eine Kühlung nach dem Gegenstromprinzip. Die in der Pelletierpresse 48 erzeugten Pellets werden über eine Zufuhrschleuse der Kühleinrichtung 49 kontinuierlich auf der ganzen Fläche verteilt zugeführt. Der Kühlluft-Ventilator ist in der Haube eingebaut. Somit gewährleistet die Haubenform eine gleichmäßige Kühlluftströmung. Der Ventilator wird immer kostengünstig betrieben, abgestimmt auf die klimatischen Bedingungen und die Durchsatzleistung. Der stabil gebaute Kühlraum hat eine große Inspektionstür mit Schauglas. An dieser sind einstellbare Materialmelder installiert, mit denen die Durchsatzleistung und die Kühlzeit vorgegeben wird. Die Ansteuerung der Melder erfolgt automatisch von einer hier nicht dargestellten Steuerungsanlage. Der Austragsmechanismus wird durch ein pneumatisches oder hydraulisches System angetrieben. Das bedeutet niedrige Energiekosten und wenig Wartungsaufwand. Die Austragsleistung ist stufenlos einstellbar. Dadurch wird eine optimale Verweilzeit erreicht. Die Weiterförderung der abgekühlten Pellets nach der Kühlvorrichtung erfolgt über einen Klappenkasten 52c entweder direkt zum Fertigwarenlager 51 oder über einen Elevator 45 und Klappenkasten 57 zu dem Verweilsilo 43 mit Abstehzellen. Aus den Abstehzellen kann das Fertigprodukt nach Ablauf der erforderlichen Verweilzeit, d.h. vorgewählten variablen Abstehzeit über die jeweiligen pneumatischen Auslaufschieber 44 mittels eines Austragskettenförderers 44a über die Klappkästen 52b direkt zum Fertigwarenlager bzw. zu einer Verladung 51 verbracht werden. Das so hergestellte Fertigprodukt ist ein rohfaserhaltiges Fertigprodukt, und zwar ein rohfaserhaltiger Extraktionsschrot von Sonnenblumensaat, der aufgeschlossen ist und einen hohen Energiewert hat und zur Fütterung von Wiederkäuern geeignet ist.

Es ist auch möglich, die erhaltene rohfaserhaltige Fraktion mit geringen Anteilen an Kernteilen, die für Wiederkäuer bestimmt ist - ohne Laugenbehandlung - von dem Sammelbehälter 31 über die Austragsförderschnecke 31a und den Zweiwege-Klappkasten 26f über eine nicht dargestellte Verbindungsleitung direkt dem Elevator 41 zuzuführen.

Wenn keine Pelletierung der erhaltenen Fraktionen gewünscht wird, kann das in dem Pressen-Vorbehälter 46 angesammelte Material über die Dosier-Austragsschnecke 47, den Zweiwege-Klappenkasten 26g über eine Förderleitung direkt zum Fertigwarenlager 51 für Wiederkäuer gefördert werden.

Erfindungsgemäß gelingt es, durch mechanische Aufbereitung und Aufschlußverfahren Sonnenblumen-Extraktionsschrot zu einer wertvollen Tiernahrung aufzubereiten und zwar in zwei Kategorien, nämlich einmal eine proteinreiche Fraktion, die einem Soja-Extraktionsschrot angenähert ist und für Monogastrier geeignet ist und in eine rohfaserhaltige veredelte Fraktion, die für Wiederkäuer geeignet ist.

Die erfindungsgemäß erzielbaren neuen Futterkomponenten aus Sonnenblumen-Extraktionsschrot sind ein reines Naturfutter. Die Produktionsanlagen können im Bedarfsgebiet aufgebaut werden. Die Produkte können an Ort und Stelle, wo auch Sonnenblumen wachsen, verarbeitet werden.

Die erfindungsgemäß durch Aufarbeiten von Sonnenblumen-Extraktionsschrot erhaltenen beiden Faktionen können nun auch industriell zu Mischfutter auf Basis von Rezepturen, die Nähr- und Wirkstoffe in Dosierungen enthalten, wie sie in den Bedarfsnormen für die Anwendungen nach Tierarten und Leistungsklassen festgelegt sind, weiterverarbeitet werden. Hierbei können die erfindungsgemäßen aus Sonnenblumen-Extraktionsschrot erhaltenen Fraktionen als preiswerter hochwertiger Futteranteil und als Ersatz für Soja-Produkte und unter Vermeidung von GVA-Produkten eingesetzt werden. Nachfolgend werden einige Modellkalkulationen für Mischfutter, deutsche aktuelle Rohstoffpreise zugrundegelegt.

Die wichtigsten Meßdaten der Rohstoffe für die vergleichende Berechnung sind die Gehalte an Eiweiß und Energie. Bei Eiweißträgern dient das marktbeherrschende Soja-Extraktionsschrot als Meßlatte für die alternativen Produkte. Mit Hilfe der linearen Programmierung kann man nach den Kriterien
- Bedarfsnormen nach Tierart und Leistungsklasse
- Meßdaten für die Gehalte an Nähr- und Wirkstoffen in den Rohstoffen
- Marktpreise der Rohstoffe
die optimale Rezeptur für das Mischfutter berechnen - also eine Rezeptur kalkulieren, die auf der Auswahl der preiswürdigen Rohstoffe basiert und gleichzeitig den Bedarfsnormen entspricht. Nachfolgend wird die Verwendung der mit dem erfindungsgemäßen Verfahren erhaltenen proteinreichen Fraktion in Mischfutter-Rezepturen für Legehennen und Schweine erläutert. Die nachfolgenden Modellkalkulationen in Tabelle 4 bis 7 zeigen, daß das neuartige Produkt gemäß Sonnenblumen-Extraktionsschrot Fraktion 1 - als Eiweißträger für Geflügel und Schweine dem Marktführer Soja-Extraktionsschrot gleichwertig ist, wenn man den Aspekt BVO außer Acht läßt. Hingegen ist Sonnenblumen-Extraktionsschrot Fraktion 1 - das per se GVO-frei ist, preislich um mehr als 10 % günstiger, wenn man zum Vergleich GVO-freies Soja-Extraktionsschrot kalkuliert. Der besseren Übersicht halber sind die wesentlichen Daten der Kalkulationen der Tabellen 4 bis 7 in Tabelle 8 zusammengefaßt. Die Schlußfolgerungen sind:
- Die Produkte - Mischfutter für Legehennen und Schweine - sind auf Basis Soja-Extraktionsschrot und Sonnenblumen-Extratktionsschrot Fraktion 1 in ihrer ernährungsphysiologischen Wertigkeit vergleichbar, d.h. die Gehalte an Protein und den limitierenden Aminosäuren liegen bei beiden Eiweißträgern im Bereich der geforderten Normen.
- Sonnenblumen-Extraktionsschrot Fraktion 1 ist - bewertet auf der Basis seiner Nährstoffgehalte - preislich kompetitiv zu handelsüblichen Soja-Extraktionsschrot.
- Sonnenblumen-Extraktionsschrot Fraktion 1 - ein Produkt, das per se GVO-frei ist - ist jedoch wesentlich preiswerter, wenn man zum Vergleich Soja-Extraktionsschrot GVO-frei heranziet.

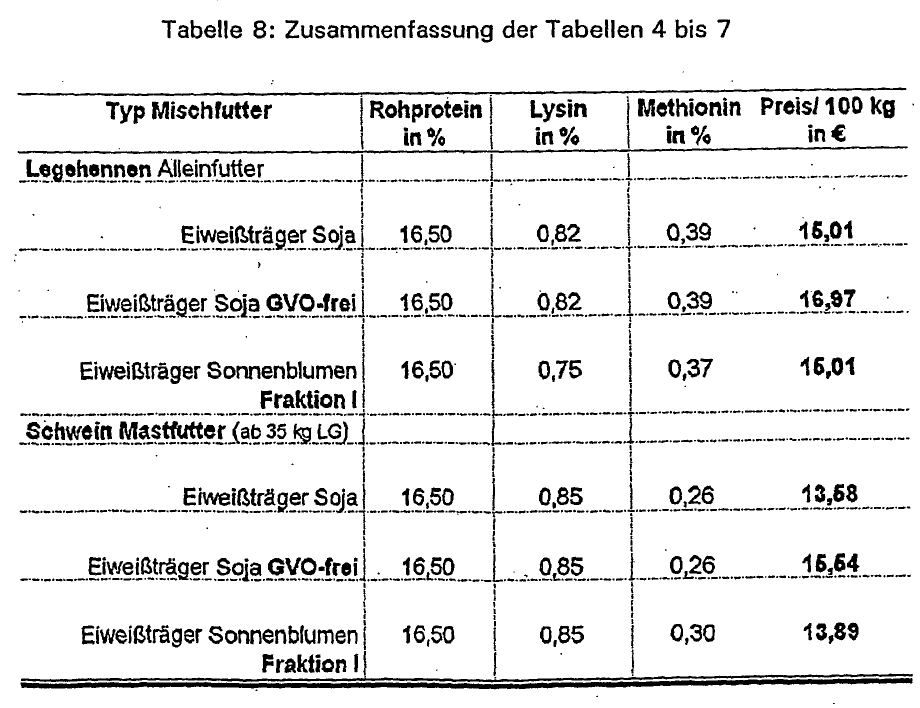

Fazit: Die Kalkulationen belegen, dass das neuartige Produkt Sonnenblumen-Extraktionsschrot Fraktion 1, hergestellt aus konventionellen Sonnenblumen-Extraktionsschrot, für die Ernährung der Monogastrier geeignet ist und mit handelsüblichem Soja-Extraktionsschrot konkurrieren kann. Im Vergleich zu Soja-Extraktionsschrot GVO-frei ist Sonnenblumen-Extraktionsschrot Fraktion 1 preislich deutlich günstiger.

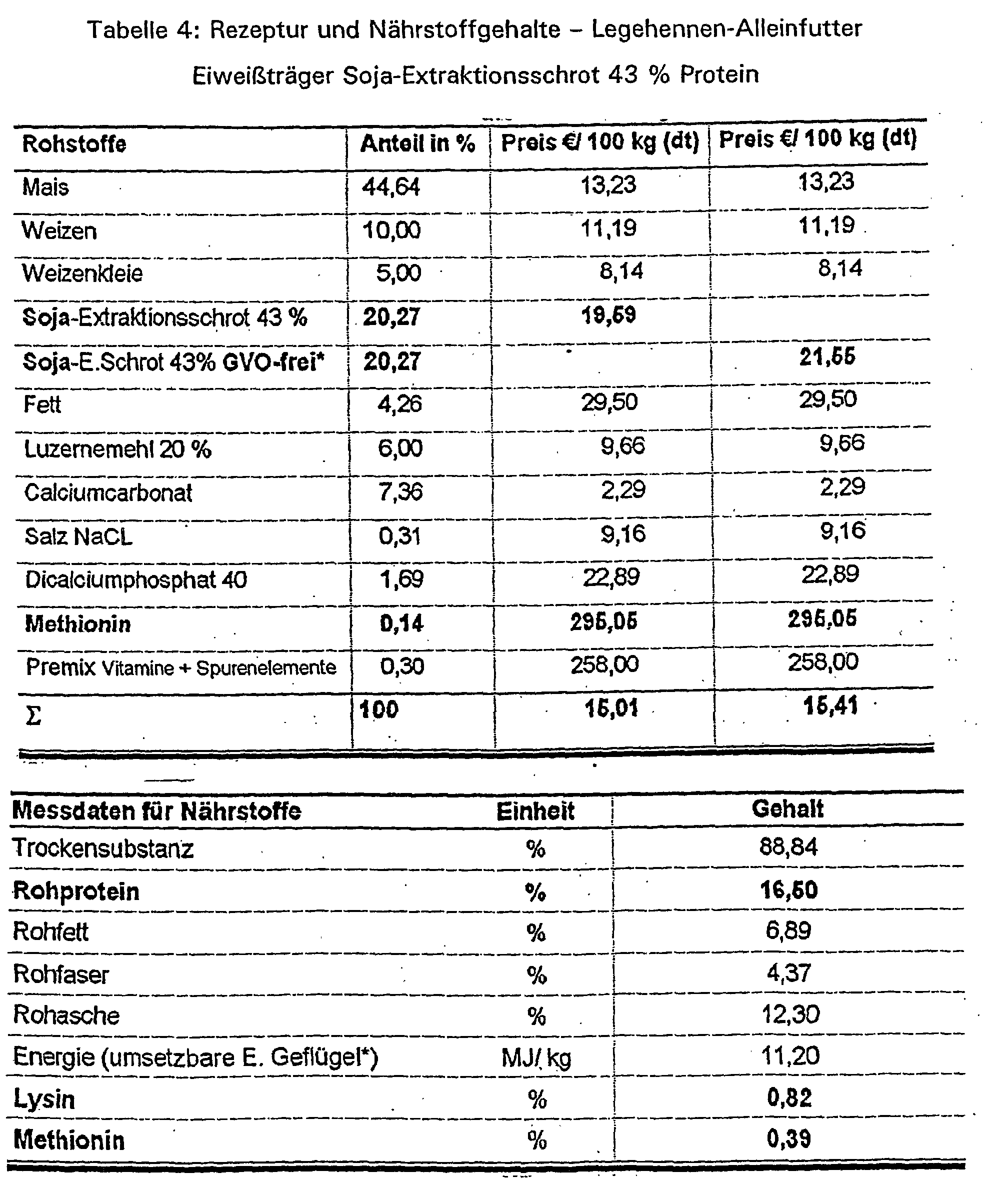

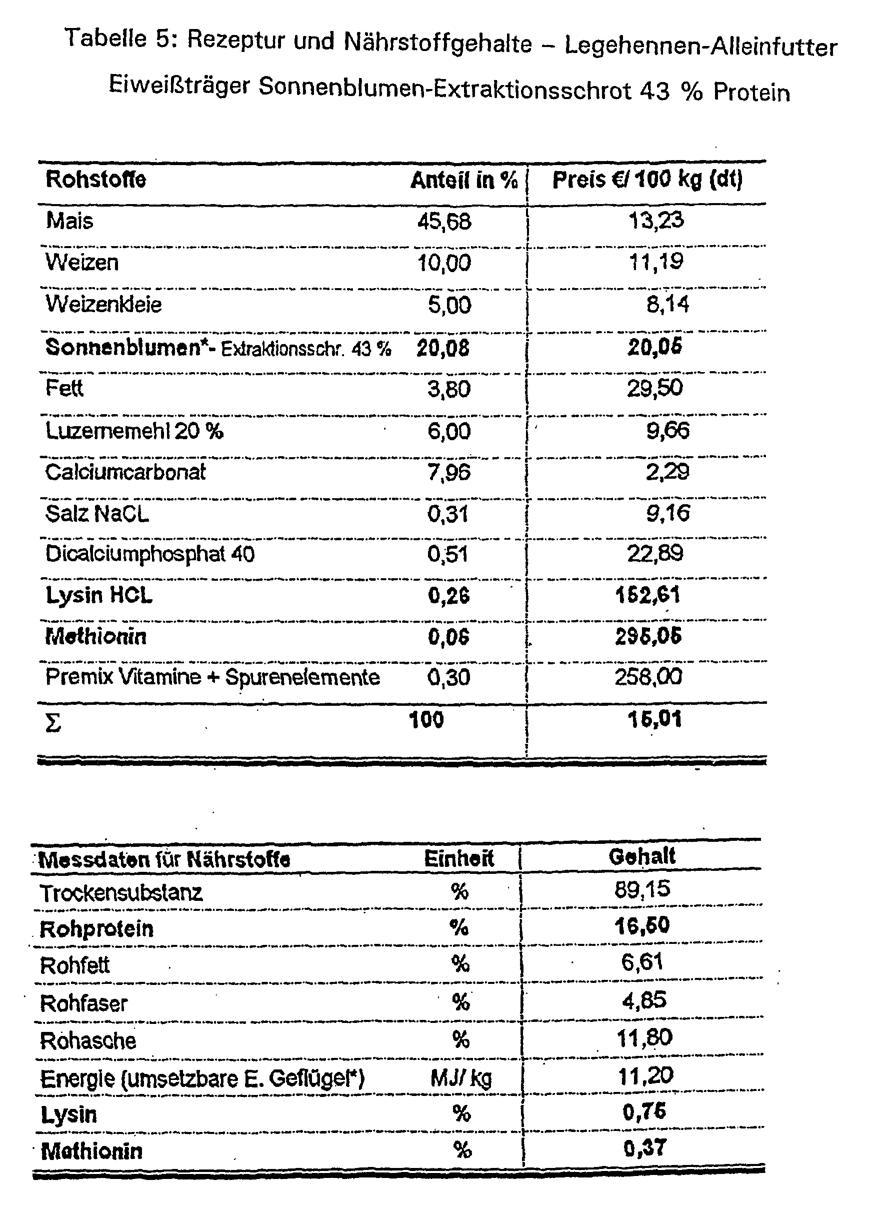

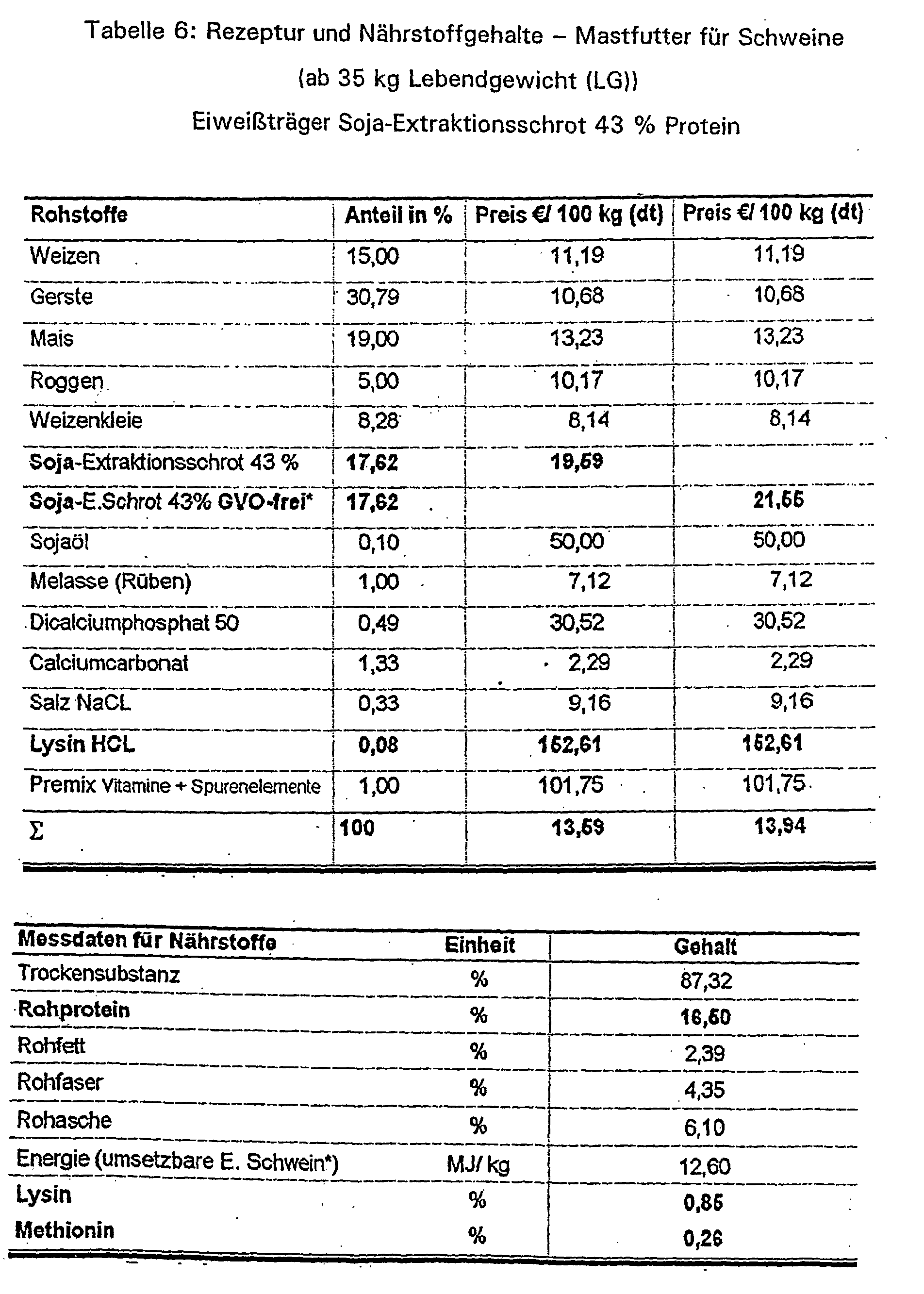

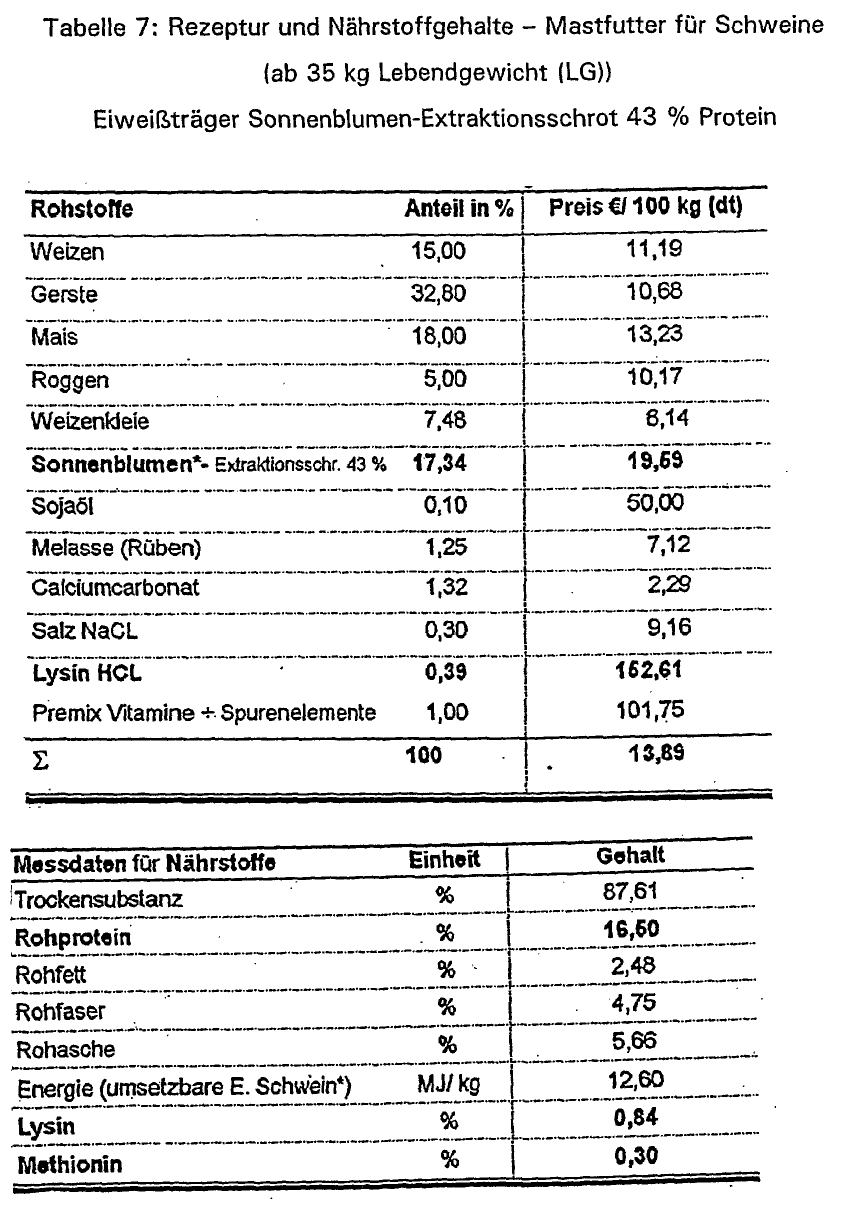

## Patentansprüche

1. Verfahren zur abfallosen Aufbereitung von Extraktionsschrot aus Sonnenblumensaat von konventionellen Sonnenblumen für die Tierernährung, wobei der Extraktionsschrot Teilchen aus Schalen, Kernteilen und Schalen mit anhaftenden Kernteilen umfaßt, die durch mindestens einmaliges Sieben nach Komgrößen getrennt in zwei Fraktionen mit unterschiedlichen Gehalten an Rohproteinen aufgetrennt werden, wobei eine proteinhaltige Fraktion mit hohem Rohproteingehalt geeignet für Monogastrier als Tiernahrung und eine rohfaserhaltige Fraktion mit niedrigerem Rohproteingehalt geeignet für Wiederkäuer als Tiernahrung erhalten wird, **dadurch gekennzeichnet, daß** die Teilchen des Extraktionsschrotes einer mechanischen Strukturierung und Zerkleinerung nach mühlentechnischen Verfahren unterworfen werden, wobei die an den Schalen anhaftenden Kernteile abgelöst werden und die Faserstruktur der groben Schalen durch Auffaserung der Schalen verbessert wird, und die Teilchen mittels Sieben nach Korngrößen getrennt werden und aus der erhaltenen Korngrößenfraktion mit den jeweils großvolumigeren Teilchen, welche beim Sieben ein Sieb nicht passiert haben, mittels Windsichten die spezifisch leichten rohfaserhaltigen Teilchen, die im wesentlichen von Schalenteilen (Spelzen) gebildet werden, unter Berücksichtigung ihres spezifischen Gewichtes abgeschieden werden, und die erhaltenen leichten rohfaserhaltigen Teilchen zu einer einen hohen Rohfasergehalt von über 15 % enthaltenden rohfaserhaltigen Fraktion mit niedrigem Rohproteingehalt aufgesammelt werden und die Teilchen mit dem höheren spezifischen Gewicht, die im wesentlichen von den Kernteilchen bzw. Kernteilchen mit anhaftenden Schalen gebildet werden, zu einer einen hohen Rohproteingehalt von über 40 % und einen Rohfasergehalt unter 10 % enthaltenden Fraktion gesammelt werden.

2. Verfahren nach Anspruch 1, **dadurch gekennzeichnet, daß** die Teilchen des Extraktionsschrotes zerkleinert werden, mittels Sieben nach Korngrößen getrennt werden und aus der Korngrößenfraktion mit den jeweils großvolumigeren Teilchen mittels Windsichten die Teilchen unter Berücksichtigung ihres spezifischen Gewichtes getrennt werden, wobei die einzelnen Verfahrensschritte bzw. Verfahrensschrittfolgen mindestens einmal, insbesondere mehrfach wiederholt werden.

3. Verfahren nach Anspruch 1 oder 2, **dadurch gekennzeichnet, daß** die beim Windsichten durch Trennung erhaltenen Teilchen mit dem höheren spezifischen Gewicht, die durch Schwerkraft abgeschieden werden, in den Strukturierungsprozeß zur weiteren Zerkleinerung durch Mahlen und anschließendem Sieben und Windsichten zurückgeführt werden.

4. Verfahren nach einem der Ansprüche 1 bis 3, **dadurch gekennzeichnet, daß** die Abscheidung der leichten rohfaserhaltigen Teilchen aus dem Windsichter nach ihrem spezifischen Gewicht mittels der Luftgeschwindigkeit und Luftdurchgangsmenge stufenlos reguliert wird.

5. Verfahren nach einem der Ansprüche 1 bis 4, **dadurch gekennzeichnet, daß** als rohproteinreiche Fraktion proteinreiches zu griesiger Struktur zerkleinertes Kernmaterial mit geringen Anteilen an Rohfaser (Schalenteilchen) aufgesammelt wird.

6. Verfahren nach einem der Ansprüche 1 bis 5, **dadurch gekennzeichnet, daß** eine rohproteinreiche Fraktion mit einem Anteil an Rohprotein über 40 % und einem Rohfasergehalt unter 10 % erhalten wird, die für die Fütterung von Monogastriern geeignet ist.

7. Verfahren nach Anspruch 1, **dadurch gekennzeichnet, daß** die rohfaserhaltige Fraktion mit einem Anteil an Rohfasern von mindestens 15 % einem Laugen-Aufschließungsverfahren, insbesondere mittels Natronlauge zur Erhöhung des Energiewertes (Verdaulichkeit) unterworfen wird.

8. Verfahren nach Anspruch 1, **dadurch gekennzeichnet, daß** die rohfaserhaltige Fraktion einem zweistufigen Prozeß zum Aufschluß der Rohfaser unterworfen wird, wobei der Aufschluß der Spelzen und Schalenteilchen durch ein Laugen-Aufschlußverfahren in Verbindung und Kombination mit einem Pelletierverfahren verbessert wird, wobei durch Druck, Reibung und Temperaturerhöhung während des Pressens eine Selbsterhitzung in den Pellets entsteht, die die Reaktionszeit des Laugenprozesses wesentlich verkürzt.

9. Verfahren nach Anspruch 7 oder 8, **dadurch gekennzeichnet, daß** die rohfaserhaltige Fraktion in einem Zwei-Stufen-Prozeß aufgeschlossen wird, wobei in der ersten Stufe ein erster Materialstrom aus der Fraktion mit flüssiger Natronlauge benetzt und gemischt wird und anschließend mit einem zweiten Materialstrom aus der Fraktion intensiv vermischt und homogenisiert wird und danach, ggf. nach Zwischenlagerung, in einer zweiten Stufe, das aufbereitete Gemisch einem Konditionierer mit zusätzlicher Dampfzufuhr zwecks Temperierung und Feuchtigkeitssteigerung des Gemisches zugeführt und anschließend in einer Presse bei einer Preßtemperatur von etwa 40 bis 65°C zu Pellets verpreßt wird und die erhaltenen Pellets anschließend unter annäherndem Feuchtigkeitserhalt auf Raumtemperatur abgekühlt werden.

10. Anlage zum kontinuierlichen Durchführen des Verfahrens nach einem der Ansprüche 1 bis 9, umfassend einen Vorratsbehälter (1) mit Dosierschnecke (2) für die gleichmäßige mengenregutierbare Austragung des Extraktionsschrotes in eine Vorrichtung (29) zum Auflösen von Klumpen und zum feinen Zerteilen des Extraktionsschrotes, und nachfolgend mindestens zwei aufeinanderfolgende Kombinationen aus einer Siebvorrichtung (5, 6, 7, 8), einem Windsichter (9, 10, 11, 12) und einem Ventilator (13, 15, 17, 19) mit Abscheider (14, 16, 18, 20) mit Austragsschleuse (14a, 16a, 18a, 20a), wobei jede Siebvorrichtung mit dem zugeordneten Windsichter für den Transport der großvolumigen, das Sieb nicht passierenden Teilchen und mit der nachfolgenden Siebvorrichtung für den Abtransport der das Sieb passierenden kleinervolumigen Teilchen mittels Verbindungsleitungen (5a, 6a, 7a, 8a bzw. 5b, 6b, 7b, 8b). verbunden ist und mindestens die zweite und jede folgende Siebvorrichtung (6, 7,8) zusätzlich eine im Inneren angeordnete bewegbare Schlagvorrichtung (6e, 7e, 8e) aufweist und jeder Windsichter (9, 10, 11, 12) mit einem zugeordneten Ventilator (13, 15, 17, 19) und Abscheider (14, 16, 18, 20) über eine Absaugleitung (9b, 10b, 11b, 12b) für das Absaugen der großvolumigen spezifisch leichten rohfaserhaltigen Teilchen verbunden ist und die abgesaugten leichten Teilchen über die Austragsschleuse (14a, 16a, 18a, 20a) und Verbindungsleitungen (14b, 16b, 18b, 20b) einem Sammelbehälter (31) für das Sammeln zu der rohfaserhaltigen Fraktion zuführbar sind, und ein Turboabscheider (21) vorgesehen ist, von dem eine Verbindungsleitung (21d) zu dem Sammelbehälter (31) führt, und die Abluftleitungen (14c, 16c, 18c, 20c) der Ventilatoren (13, 15, 17, 19) zu dem Turboabscheider (21) führen, des weiteren von dem Ausgang (9a, 10a, 11a) jedes Windsichters (9, 10, 11) ausgenommen des letzten Windsichters (12), eine Verbindungsleitung (9c, 10c, 11c) zu einer gemeinsamen Zerkleinerungsvorrichtung (22 bis 25) für die mit Kernteilen behafteten rohproteinhaltigen Teilchen führt, wobei der Ausgang (8b) der letzten Siebvorrichtung (8) und der Ausgang (12a) des letzten Windsichters (12) über einen Zweiwege-Klappenkasten (26d) Verbindungsleitungen (12d bzw. 12c) zu dem Sammelbehälter (50) für die proteinhaltige Fraktion bzw. Sammelbehälter (31) für die rohfaserhaltige Fraktion aufweisen und der Ausgang (24a) der Zerkleinerungsvorrichtung (22 bis 25) mit dem Eingang der ersten Siebvorrichtung (5) über eine Fördervorrichtung (3) verbunden ist.

11. Anlage nach Anspruch 10, **dadurch gekennzeichnet, daß** sie ein geschlossenes System bildet und kontinuierlich betreibbar ist, und die Teilchen mittels Fördervorrichtungen bzw. in Rohren von einer Station zur nächsten gefördert werden.

12. Anlage nach einem der Ansprüche 10 oder 11, **dadurch gekennzeichnet, daß** die Vorrichtung (29) zum Auflösen von Klumpen des Extraktionsschrotes mit Passierwerkzeugen und einem Siebeinsatz ausgestattet ist.

13. Anlage nach einem der Ansprüche 10 bis 12, **dadurch gekennzeichnet, daß** die erste Siebvorrichtung (5) zwei Siebeinlagen aufweist, wobei die erste Siebeinlage die groben Teilchen zurückhält, die direkt der Zerkleinerungsanlage (22 bis 25) zuführbar sind und die zweite Siebeinlage einen weiteren Anteil größervolumiger Teilchen zurückhält, die dem ersten Windsichter (9) zugeführt werden, in dem eine Trennung nach spezifischem Gewicht vorgenommen wird, wobei die spezifisch leichten Teilchen, insbesondere die rohfaserhaltigen Schalenteilchen von dem nachfolgenden Ventilator (13) und Abscheider (14) in die Verbindungsleitung (9b) angesaugt werden und über die Austragsschleuse (14a) und Verbindungsleitung (14b) dem Sammelbehälter (31) für die rohfaserhaltige Fraktion zugeführt werden.

14. Anlage nach einem der Ansprüche 10 bis 13, **dadurch gekennzeichnet, daß** die Windsichter (9, 10, 11, 12) jeweils mit einer Vibrationsrinne (9g, 10g, 11g, 12g) für die von der Siebvorrichtung kommenden Teilchen ausgestattet sind, sowie eine Luftklappe (9h, 10h, 11h, 12h) zum Regeln der Luftmenge und Absaugleistung zwecks Absaugung der spezifisch leichteren Teile, insbesondere der Schalenteile (Spelzen) aus der Vibrationsrinne, wobei die in der Vibrationsrinne verbleibenden Teilchen unter Schwerkraft ausgetragen und über die Verbindungsleitungen (9c, 10c, 11c) wiederum der Zerkleinerungsvorrichtung (22 bis 25) zuführbar sind.

15. Anlage nach Anspruch 14, **dadurch gekennzeichnet, daß** die Trenngrenze basierend auf den spezifischen Gewichten der Teilchen, die auf die Vibrationsrinne des Windsichters gelangen mittels Regelung der Absaugleistung einstellbar ist.

16. Anlage nach einem der Ansprüche 10 bis 15, **dadurch gekennzeichnet, daß** der Turboabscheider (21), der die Abluft aus den Windsichtem und Ventilatoren/Abscheidern über die Abluftleitungen absaugt, ein schneckenförmiges Gehäuse mit Hauptgang aufweist, und über einen Spalt im Hauptgang ein Nachabscheider für in der Abluft mitgeführte leichte rohfaserhaltige Teilchen angeschlossen ist, die über eine Abfuhrleitung (21d) zu dem Sammelbehälter (31) führt.

17. Anlage nach einem der Ansprüche 10 bis 16, **dadurch gekennzeichnet, daß** die der ersten Siebvorrichtung (5) nachfolgenden Siebmaschinen (6 bis 8) einen konischen Siebkorb aufweisen, innerhalb dessen ein rotierendes Schlagkreuz (6e, 7e, 8e) mit Wirbelleisten und Bürsten am Umfang angeordnet ist.

18. Anlage nach einem der Ansprüche 10 bis 17, **dadurch gekennzeichnet, daß** als Zerkleinerungsvorrichtung eine Mühle (24) mit mehreren Prallplatten und variabler Rotorumfangsgeschwindigkeit vorgesehen ist, um die Kemteile von den Schalenteilen zu trennen und zu zerkleinern und ein rieselfähiges Produkt zu erhalten.

19. Anlage nach einem der Ansprüche 10 bis 18, **dadurch gekennzeichnet, daß** am Ausgang (10a, 11a, 12a) der Windsichter (10, 11, 12) je eine Klappe (26b, 26c, 26d) vorgesehen ist, um den Ausgang wahlweise mit der Anschlußleitung (10c, 11c, 12c) für die weitere Behandlung bzw. einer Anschlußleitung (10d, 11d, 12d) zum Sammelbehälter (50) für die proteinhaltige Fraktion zu verbinden.

20. Anlage nach einem der Ansprüche 10 bis 19, **dadurch gekennzeichnet, daß** dem Sammelbehälter (31) für die rohfaserhaltige Fraktion eine Aufbereitungsanlage (33 bis 40) zum Aufschließen der rohfaserhaltigen Fraktion mittels Natronlauge nachgeordnet ist, die einen Vorratsbehälter (34) mit ausgangsseitiger regelbarer Dosierschnecke (35) und Durchlaufwaage (36) für einen Wirbelmischer (37) umfaßt, der mit einer regelbaren Dosiervorrichtung (39, 40) mit Sprüheinrichtung für die Natronlauge verbunden ist.

21. Anlage nach Anspruch 20, **dadurch gekennzeichnet, daß** ausgangsseitig des Wirbelmischers für die Fraktion wahlweise über einen Klappkasten (52a) eine Verbindungsleitung zu einem Verweilsilo (43) oder einer Pelletierpressanlage (46 bis 49) mit Einfüllbehälter (46) förderbar ist, wobei vom Verweilsilo (43) ebenfalls eine weitere Förderleitung zu der Preßvorrichtung (46 bis 49) vorgesehen ist.

22. Anlage nach Anspruch 21, **dadurch gekennzeichnet, daß** die Pelletieranlage einen Konditionierer (48) umfaßt, in welchen die Fraktion aus dem Einlaufbehälter (46) über eine Dosierschnecke (47) geregelt einbringbar ist, wobei der Konditionierer (48) des weiteren mit einer Dampfdosiereinrichtung (53) mit vorgegebener Temperaturautomatik verbunden ist und eine Pelletierpresse mit Ringmatrize vorgesehen ist, die von dem Konditionierer gespeist wird und der Pelletierpresse nachgeordnet eine Kühleinrichtung zur schonenden Abkühlung der Pellets nachgeordnet ist.

23. Anlage nach einem der Ansprüche 10 bis 22, **dadurch gekennzeichnet, daß** ein kontinuierlicher vollautomatischer Betrieb der Anlage mittels des eingangsseitigen Vorratsbehälters (1) für den Extraktionsschrot, Sammelbehälter (31) für die rohfaserhaltige Fraktion, Verweilsilos (43) für die rohfaserhaltige Fraktion, sowie vorratshaltende Einlaufbehälter (22) für die Zerkleinerungsanlage, Einlaufbehälter (34) für den Wirbelmischer und Einlaufbehälter (46) für die Pelletieranlage sowie angetriebene und regelbare Fördereinrichtungen einschließlich Meßeinrichtungen für die Füllstände der Materialien enthaltenden Behälter vorgesehen ist.

## Claims

1. A method for waste-free preparation of extraction meal from sunflower seed from conventional sunflowers for animal feed, wherein the extraction meal comprising particles from shells, kernel parts and shells with adhering kernel parts, which are separated by particle sizes at least once by means of straining into two fractions with different contents of crude proteins and crude fibers, in which a protein-containing fraction with a high crude protein content, suitable for animal feed for monogastric animals and a crude-fiber-containing fraction with a lower crude protein content suitable as animal feed for ruminants is obtained, **characterized in that** the particles of the extraction meal are subjected to a mechanically structuring and comminution with grinding processes, and the kernel parts adhering to the shells are separated and the fiber structure of the coarse shells is improved by a fiber breakdown of the shells and the particles are separated by particle sizes by means of straining and the specifically light-weight crude-fiber-containing particles, which are formed essentially from shell parts (husks), are separated from the particle size fraction obtained having the larger-volume particles, which do not pass a strainer insert during straining by means of wind sifting taking their specific weight into account, and the light-weight crude-fiber-containing particles obtained are collected as a crude-fiber-containing fraction containing a high crude fiber content of over 15% and with low crude protein content and the particles with the higher specific weight, which are formed essentially by the kernel particles or kernel particles with adhering shells are collected as a fraction containing a high crude protein content of over 40% and a crude fiber content of less than 10%.

2. The method of claim 1, **characterized in that** the particles of the extraction meal are comminuted, are separated by particle sizes by means of straining, and from the particle size fraction having the larger-volume particles, the particles are separated taking their specific weight into account by means of wind sifting, and the individual method steps and sequences of method steps are repeated at least once and in particular multiple times.

3. The method of one of the claims 1 or 2, **characterized in that** the obtained particles by means of straining by separation with the higher specific weight, being separated out by gravity, are returned to the structuring process again for further comminution by grinding and subsequent straining and sifting.

4. The method of one of claims 1 to 3, **characterized in that** the separating out of the light-weight crude-fiber-containing particles from the wind sifter in accordance with their specific weight is regulated continuously variably by means of the air speed and air throughput.

5. The method of one of claims 1 to 4, **characterized in that** protein-rich and to farina-like structure comminuted kernel material with slight portions of crude fibers (shell parts) is collected as crude protein-rich fraction.

6. The method of one of claims 1 to 5, **characterized in that** a crude protein-rich fraction with a proportion of crude protein of over 40% and a crude fiber content of less than 10% is obtained, which is suitable for feeding monogastric animals.

7. The method of claim 1, **characterized in that** the crude-fiber-containing fraction with a proportion of crude fibers of at least 15% is subjected to lye disintegration, in particular by means of caustic soda, to increase the energy value (digestibility).

8. The method of one of claim 1, **characterized in that** the crude-fiber-containing fraction is subjected to a two-stage process for disintegrating of the crude fibers, and the disintegration of the husks and shell particles is improved by lye disintegration in conjunction and combination with a pelleting process, in which by pressure, friction and increasing the temperature during the pressing, self-heating in the pellets is brought about, which shortens the reaction time of the lye process.

9. The method of claims 7 or 8, **characterized in that** the crude-fiber-containing fraction is disintegrated in a two-stage process, in which in the first stage, a first stream of material from the fraction is wetted with liquid caustic soda and mixed, and then mixed intensively with a second stream of material from the fraction and homogenized, and after that, optionally after intermediate storage, in a second stage, the prepared mixture is delivered to a conditioner with steam additionally added for the sake of tempering and increasing the moisture in the mixture, and then in a press, at a press temperature of approximately 40 to 65°C is pressed into pellets, and the pellets obtained are then cooled down to room temperature while maintaining approximately the same moisture content.

10. A system for continuously performing the method of one of claims 1 to 9, including a storage tank (1) with a metering worm (2) for uniform, regulatable-quantity discharging of the extraction meal into a device (29) for breaking up clumps and finely comminuting the extraction meal, and subsequently, by means of at least two successive combinations of a strainer device (5, 6, 7, 8), a wind sifter (9, 10, 11, 12), and a fan (13, 15, 17, 19) with a separator (14, 16, 18, 20) with a discharge gate (14a, 16a, 18a, 20a), and each strainer device is connected to the associated wind sifter for transporting the large-volume particles that do not pass through the strainer and is connected to the next strainer device, for carrying away the smaller-volume particles that do pass through the strainer, by means of connecting lines (5a, 6a, 7a, 8a; 5b, 6b, 7b, 8b), and at least the second and every subsequent strainer device (6, 7, 8) additionally has a beater device (6e, 7e, 8e) that is movable in its interior, and each wind sifter (9, 10, 11, 12) is connected to an associated fan (13, 15, 17, 19) and separator (14, 16, 18, 20) via a suction extraction line (9b, 10b, 11b, 12b) for extracting the large-volume, specifically lightweight particles containing crude fiber by suction, and the lightweight particles removed by suction can be delivered, via the discharge gate (14a, 16a, 18a, 20a) and connecting lines (14b, 16b, 18b, 20b) to a collecting tank (31) for collecting to form the crude-fiber-containing fraction, and a turbo separator (21) is provided, from which one connecting line (21d) leads to the collecting tank (31), and the air-exhaust lines (14c, 16c, 18c, 20c) of the fans (13, 15, 17, 19) lead to the turbo separator (21), and furthermore, from the outlet (9a, 10a, 11a) of each wind sifter (9, 10, 11), except for the last wind sifter (12), a connecting line (9c, 10c, 11c) leads a common comminuting device (22-25) for the crude-protein-containing particles including kernel parts, and the outlet (8b) of the last strainer device (8) and the outlet (12a) of the last wind sifter (12), via a two-way valve box (26d), have connecting lines (12d and 12c, respectively), to the collecting tank (50) for the protein-containing fraction and the collecting tank (31) for the crude-fiber-containing fraction, respectively, and the outlet (24a) of the comminuting device (22-25) communicates with the inlet to the first strainer device (5) via a feeder device (3).

11. The system of claim 10, **characterized in that** it forms a closed system and can be operated continuously, and the particles are conveyed from one station to the next by means of feeder devices or in pipes.

12. The system of one of claims 10 or 11, **characterized in that** the device (29) for breaking up clumps in the extraction meal is equipped with grinders and a strainer insert.

13. The system of one of claims 10 to 12, **characterized in that** the first strainer device (5) has two strainer inserts, and the first strainer insert traps the coarse particles, which can be delivered directly to the comminuting system (22-25), and the second strainer insert traps a further portion of larger-volume particles, which are delivered to the first wind sifter (9), in which a separation by specific weight is performed, and the specifically lightweight particles, in particular the shell particles containing crude fiber, are aspirated into the connecting line (9b) by the following fan (13) and separator (14) and are delivered, via the discharge gate (14a) and connecting line (14b), to the collecting tank (31) for the crude-fiber-containing fraction.

14. The system of one of claims 10 to 13, **characterized in that** the wind sifters (9, 10, 11, 12) are each equipped with a vibration channel (9g, 10g, 11g, 12g) for the particles arriving from the strainer device, and an air valve (9h, 10h, 11h, 12h) for regulating the air quality and the suction extraction power by means of suction extraction of the specifically lighter-weight parts, in particular the shell parts (husks), from the vibration channel, and the particles that remain in the vibration channel are discharged by gravity and can be delivered in turn via the connecting lines (9c, 10c, 11c) to the comminuting device (22-25).

15. The system of claim 14, **characterized in that** the separation limit, based on the specific weights of the particles that reach the vibration channel of the wind sifter, is adjustable by means of regulating the suction extraction power.

16. The system of one of claims 10 to 15, **characterized in that** the turbo separator (21), which removes the waste air by suction from the wind sifters and fans/separators via the air-exhaust lines, has a wormlike housing with a primary corridor, and via a gap in the primary corridor, a downstream separator for the lightweight particles containing crude fiber that are entrained in the waste air is connected, which leads to the collecting tank (31) via an extraction line (21d).

17. The system of one of claims 10 to 16, **characterized in that** the straining machines (6-8) following the first strainer device (5) have a conical strainer basket, inside which a rotating beating cross (6e, 7e, 8e) with turbulence strips and brushes is disposed on the circumference.

18. The system of one of claims 10 to 17, **characterized in that** a mill (24) with a plurality of impact plates and a variable circumferential rotor speed is provided as the comminuting device, for separating the kernel parts from the shell parts and comminuting them and for obtaining a pourable product.

19. The system of one of claims 10 to 18, **characterized in that** one flap (26b, 26c, 26d) is provided at each outlet (10a, 11a, 12a) of the wind sifters (10, 11, 12), in order to connect the outlet selectively with the connection line (10c, 11c, 12c) for further treatment or a connection line (10d, 11d, 12d) to the collecting tank (50) for the protein-containing fraction.

20. The system of one of claims 10 to 19, **characterized in that** a preparation system (33-40) for disintegrating the crude-fiber-containing fraction by means of caustic soda is disposed downstream of the collecting tank (31) for the crude-fiber-containing fraction and includes a preliminary tank (34) with a discharge metering worm (35) on the outlet side and a flow weighing scales (36) for a turbulence mixer, with which a regulatable metering device (39, 40) with a sprayer for the caustic soda communicates.

21. The system of claim 20, **characterized in that** on the outlet side of the turbulence mixer for the fraction, a connecting line can be fed selectively via a valve box (52a) to a storage silo (43) or a pellet pressing system (46-49) with inlet tanks (46), and a further feed line is also provided from the storage silo (43) to the pressing system (46-49).

22. The system of claim 21, **characterized in that** the pelleting system includes a conditioner (48), into which the fraction from the inlet tanks (46) can be introduced, regulated via a metering worm (47), and the conditioner (48) furthermore communicates with a steam metering device (53) with a predetermined automatic temperature system, and a pelleting press with a ring matrix is provided, which is fed from the conditioner, and a cooling device for gentle cooling of the pellets is disposed downstream of the pelleting press.

23. The system of one of claims 10 to 22, **characterized in that** a continuous, fully-automatic operation of the system is provided, by means of the storage tank (1) on the inlet side for the extraction meal, collecting tank (31) for the crude- fiber-containing fraction, storage silos (43) for the crude- fiber-containing fraction, and inlet tanks (22) that store a supply for the comminuting device, inlet tanks (34) for the turbulence mixer, and inlet tanks (46) for the pelleting system, as well as driven, regulatable feed devices, including measuring instruments for the fill levels of the tanks that contain material.

## Revendications

1. Procédé de préparation sans déchets de gruau d'extraction de graines de tournesol de fleurs de tournesols conventionnelles pour l'alimentation animale, le gruau d'extraction comprenant des particules d'enveloppes, de parties de noyaux et d'enveloppes avec des parties de noyaux adhérentes, qui sont séparées par au moins un tamisage selon la granulométrie en deux fractions ayant des teneurs différentes en protéines brutes avec obtention d'une fraction protéinique à haute teneur en protéines brutes convenant comme alimentation animale pour monogastrés et d'une fraction contenant des fibres brutes à faible teneur en protéines brutes convenant comme alimentation animale pour des ruminants, **caractérisé en ce que** les particules du gruau d'extraction sont soumises à une structuration et un déchiquetage mécaniques selon des procédés utilisant des moulins, les parties de noyaux adhérant aux enveloppes étant détachées et la structure fibreuse des enveloppes grossières étant améliorée par séparation des fibres des enveloppes, et les particules étant séparées en fonction de la granulométrie à l'aide de tamis et, à partir de la fraction granulométrique obtenue avec les particules respectivement plus volumineuses, qui n'ont pas passé un tamis lors du tamisage, les particules de poids spécifique plus faible contenant des fibres brutes, qui sont formées essentiellement de parties d'enveloppes (glumes), étant éliminées dans un séparateur à air en tenant compte de leur poids spécifique, et les particules légères obtenues contenant des fibres brutes étant regroupées en une fraction à teneur élevée en fibres brutes supérieure à 15% à faible teneur en protéines brutes et les particules de poids spécifique plus élevé, qui sont formées essentiellement de parties de noyaux ou de parties de noyaux avec enveloppes adhérentes, étant regroupées en une fraction à teneur élevée en protéines brutes de plus de 40% et teneur en fibres brutes inférieure à 10%.

2. Procédé suivant la revendication 1, **caractérisé en ce que** les particules du gruau d'extraction sont déchiquetées, séparées par tamisage en fonction de la granulométrie et, à partir de la fraction granulométrique obtenue avec les particules respectivement plus volumineuses, les particules sont séparées dans un séparateur à air en tant compte de leur poids spécifique, les différentes étapes de procédé ou séquences d'étapes de procédé étant répétées au moins une fois, en particulier plusieurs fois.

3. Procédé suivant la revendication 1 ou 2, **caractérisé en ce que** les particules de poids spécifique plus élevé obtenues par séparation dans le séparateur à air, qui sont éliminées par gravité, sont recyclées dans le processus de structuration pour déchiquetage supplémentaire par broyage et tamisage et séparation par air subséquents.

4. Procédé suivant l'une des revendications 1 à 3, **caractérisé en ce que** l'élimination dans le séparateur à air en fonction de leur poids spécifique des particules légères obtenues contenant des fibres brutes est régulée en continu à l'aide de la vitesse de l'air et du débit de passage d'air.

5. Procédé suivant l'une des revendications 1 à 4, **caractérisé en ce qu'**on recueille comme fraction riche en protéines brutes du matériau de noyau déchiqueté en une structure de semoule à faible teneur en fibres brutes (parties d'enveloppes).

6. Procédé suivant l'une des revendications 1 à 5, **caractérisé en ce qu'**on obtient une fraction riche en protéines brutes avec une teneur en protéines brutes supérieure à 40% et une teneur en fibres brutes inférieure à 10%, qui convient pour l'alimentation de monogastrés.

7. Procédé suivant la revendication 1, **caractérisé en ce que** la fraction contenant des fibres brutes avec une teneur en fibres brutes d'au moins 15% est soumise à un procédé de désagrégation par lessive, en particulier à l'aide de lessive caustique, afin d'augmenter la valeur énergétique (digestibilité).

8. Procédé suivant la revendication 1, **caractérisé en ce que** la fraction contenant des fibres brutes est soumise à un procédé en deux étapes de désagrégation des fibres brutes, la désagrégation des glumes et des parties d'enveloppes étant améliorée par un procédé de désagrégation par lessive en liaison et combinaison avec un procédé d'agglomération en boulettes, un auto-échauffement se produisant dans les boulettes sous l'action de la pression, du frottement et d'augmentation de température pendant le pressage, qui raccourcit sensiblement le temps de réaction du processus de lessivage.

9. Procédé suivant la revendication 7 ou 8, **caractérisé en ce que** la fraction contenant des fibres brutes est désagrégée dans un procédé en deux étapes, un premier flux de matière de la fraction étant mouillé et mélangé à l'aide de lessive caustique dans la première étape et ensuite mélangé intensivement et homogénéisé avec un deuxième flux de matière de la fraction et ensuite, le cas échéant après un stockage intermédiaire, le mélange préparé étant envoyé dans une deuxième étape dans un dispositif de conditionnement avec apport supplémentaire de vapeur dans un but de conditionnement en température et d'augmentation de l'humidité du mélange et ensuite pressé en boulettes dans une presse à une température de pressage d'environ 40 à 65°C et les boulettes obtenues étant ensuite refroidies à température ambiante avec maintien approximatif de leur humidité.

10. Installation de réalisation en continu du procédé suivant l'une des revendications 1 à 9, comprenant un réservoir de stockage (1) avec vis de dosage (2) pour l'extraction régulière à débit réglable du gruau d'extraction dans un dispositif (29) de dissolution des grumeaux et de division fine du gruau d'extraction, et ensuite au moins deux combinaisons successives d'un dispositif de tamisage (5, 6, 7, 8), d'un séparateur à air (9, 10, 11, 12) et d'un ventilateur (13, 15, 17, 19) avec séparateur (14, 16, 18, 20) avec sas d'extraction (14a, 16a, 18a, 20a), dans lequel chaque dispositif de tamisage est raccordé à l'aide de tuyauteries de raccordement (5a, 6a, 7a, 8a bzw. 5b, 6b, 7b, 8b) au séparateur à air correspondant pour le transport des particules de grand volume, ne passant pas le tamis, et au dispositif de tamisage d'aval pour l'évacuation des particules de petit volume, passant le tamis, et au moins le deuxième dispositif de tamisage et chacun des suivants (6, 7, 8) présente en plus un dispositif de battage (6e, 7e, 8e) mobile disposé à l'intérieur et chaque séparateur à air (9, 10, 11, 12) est relié à un ventilateur (13, 15, 17, 19) et un séparateur (14, 16, 18, 20) correspondants via une tuyauterie d'aspiration (9b, 10b, 11b, 12b) pour l'aspiration des particules de grand volume de faible poids spécifique contenant des fibres brutes et les particules légères aspirées peuvent être amenées via le sas d'extraction (14a, 16a, 18a, 20a) et les tuyauteries de liaison (14b, 16b, 18b, 20b) à un récipient de collecte (31) pour la collecte avec la fraction contenant des fibres brutes, et un turboséparateur (21) est prévu, duquel une tuyauterie de raccordement (21d) conduit au récipient de collecte (31), et les conduites d'air sortant (14c, 16c, 18c, 20c) des ventilateurs (13, 15, 17, 19) conduisent au turboséparateur (21), par ailleurs une tuyauterie de raccordement (9c, 10c, 11c) conduit de la sortie (9a, 10a, 11a) de chaque séparateur à air (9, 10, 11), sauf du dernier séparateur à air (12), vers un dispositif de déchiquetage commun (22 à 25) pour les particules contenant des protéines brutes avec parties de noyaux adhérentes, la sortie (8b) du dernier dispositif de tamisage (8) et la sortie (12a) du dernier séparateur à air (12) présentant via une boîte à clapets à deux voies (26d) des tuyauteries de raccordement (12d et 12c) au récipient de collecte (50) pour la fraction contenant des protéines brutes et au récipient de collecte (31) pour la fraction contenant des fibres brutes et la sortie (24a) du dispositif de déchiquetage (22 à 25) étant reliée à l'entrée du premier dispositif de tamisage (5) via un dispositif de transport (3).

11. Installation suivant la revendication 10, **caractérisée en ce qu'**elle constitue un système fermé et peut être exploitée en continu et les particules sont transportées à l'aide de dispositifs de transport et dans des tuyaux d'une station à la suivante.

12. Installation suivant l'une des revendications 10 ou 11, **caractérisée en ce que** le dispositif (29) de dissolution des grumeaux du gruau d'extraction est équipé d'outils de hachage et d'un tamis.

13. Installation suivant l'une des revendications 10 à 12, **caractérisée en ce que** le premier dispositif de tamisage (5) présente deux tamis, le premier tamis retenant les particules grossières qui peuvent être envoyées directement à l'installation de déchiquetage (22 à 25) et le deuxième tamis retenant une autre partie de particules de grand volume, qui sont envoyées au premier séparateur à air (9), dans lequel une séparation est effectuée suivant le poids spécifique, les particules de poids spécifique plus faible, en particulier les parties d'enveloppes contenant des fibres brutes, étant aspirées par le ventilateur subséquent (13) et le séparateur (14) dans la tuyauterie de liaison (9b) et étant amenées via le sas d'extraction (14a) et la tuyauterie de liaison (14b) au récipient de collecte (31) pour la fraction contenant des fibres brutes.

14. Installation suivant l'une des revendications 10 à 13, **caractérisée en ce que** les séparateurs à air (9, 10, 11, 12) sont chacun équipés d'une goulotte vibrante (9g, 10g, 11g, 12g) pour les particules venant du dispositif de tamisage, ainsi que d'un clapet à air (9h, 10h, 11h, 12h) pour la régulation de la quantité d'air et de la puissance d'aspiration afin d'aspirer les particules de poids spécifique plus faible, en particulier les parties d'enveloppes (glumes) hors de la goulotte vibrante, les particules restant dans la goulotte vibrante étant extraites par gravité et pouvant être ramenées via les tuyauteries de liaison (9c, 10c, 11c) au dispositif de déchiquetage (22 à 25).

15. Installation suivant la revendication 14, **caractérisée en ce que** la limite de séparation basée sur les poids spécifiques des particules qui parviennent sur la goulotte vibrante du séparateur à air est réglable via la régulation de la puissance d'aspiration.

16. Installation suivant l'une des revendications 10 à 15, **caractérisée en ce que** le turboséparateur (21), qui aspire l'air sortant des séparateurs à air et des ventilateurs/séparateurs via les tuyauteries d'air sortant, présente un carter de forme hélicoïdale avec un passage principal et qu'un séparateur d'aval est raccordé via un interstice dans le passage principal pour les particules légères contenant des fibres brutes emportées dans l'air sortant, lequel conduit via une tuyauterie d'évacuation (21d) au récipient de collecte (31).

17. Installation suivant l'une des revendications 10 à 16, **caractérisée en ce que** les tamis (6 à 8) suivant le premier dispositif de tamisage (5) présentent une crépine conique, à l'intérieur de laquelle est disposée une croix de battage rotative (6e, 7e, 8e) portant des tringles de tourbillonnement et des brosses à sa périphérie.

18. Installation suivant l'une des revendications 10 à 17, **caractérisée en ce qu'**un moulin (24) avec plusieurs plaques déflectrices et à vitesse périphérique variable du rotor est prévu comme dispositif de déchiquetage pour séparer les parties de noyaux des parties d'enveloppes et les déchiqueter et obtenir un produit coulant.

19. Installation suivant l'une des revendications 10 à 18, **caractérisée en ce qu'**un clapet (26b, 26c, 26d) est prévu à chaque sortie (10a, 11a, 12a) des séparateurs à air (10, 11, 12) pour connecter la sortie au choix avec la tuyauterie de liaison (10c, 11c, 12c) pour la suite du traitement ou à une tuyauterie de liaison (10d, 11d, 12d) vers le récipient de collecte (50) pour la fraction contenant des protéines.

20. Installation suivant l'une des revendications 10 à 19, **caractérisée en ce qu'**une installation de traitement (33 à 40) est disposée en aval du récipient de collecte (31) afin de désagréger la fraction contenant des fibres brutes à l'aide de lessive caustique et comprend un réservoir de stockage (34) avec vis de dosage réglable (35) à la sortie et une balance de passage (36) pour un turbomélangeur (37), qui est relié à un dispositif de dosage réglable (39, 40) avec dispositif de pulvérisation pour la lessive caustique

21. Installation suivant la revendication 20, **caractérisée en ce que**, à la sortie du turbomélangeur pour la fraction, une tuyauterie de liaison peut être transportée via une boîte à clapets (52a) au choix vers un silo de séjour (43) ou une installation de pressage de boulettes (46 à 49) avec récipient de remplissage (46), une autre tuyauterie de liaison étant également prévue du silo de séjour (43) vers le dispositif de pressage (46 à 49).

22. Installation suivant la revendication 21, **caractérisée en ce que** l'installation de d'agglomération en boulettes comprend un dispositif de conditionnement (48), dans lequel la fraction du récipient d'entrée (46) peut être introduite avec régulation via une vis de dosage (47), le dispositif de conditionnement (48) étant relié par ailleurs à un dispositif de dosage de vapeur (53) avec régulation automatique de température prédéfinie et une presse d'agglomération en boulettes avec matrice annulaire étant prévue, qui est alimentée par le dispositif de conditionnement et un dispositif de réfrigération étant disposé en aval de la presse d'agglomération en boulettes afin de refroidir les boulettes en douceur.

23. In stallation suivant l'une des revendications 10 à 22, **caractérisée en ce qu'**un fonctionnement continu entièrement automatique de l'installation est prévu à l'aide du réservoir de stockage (1) côté entrée pour le gruau d'extraction, d'un récipient de collecte (31) pour la fraction contenant des fibres brutes, d'un silo de séjour (43) pour la fraction contenant des fibres brutes, ainsi que d'un récipient d'entrée de stockage (22) pour l'installation de déchiquetage, d'un récipient d'entrée (34) pour le turbomélangeur et d'un récipient d'entrée (46) pour l'installation d'agglomération en boulettes ainsi que de dispositifs de transport motorisés et réglables, y compris des dispositifs de mesure, pour les niveaux de remplissage des récipient contenant des matériaux.
